# EUROPEAN PATENT APPLICATION

(11) **EP 4 036 723 A1**
(43) Date of publication of application: **03.08.2022**
(21) Application number: 20867146.1
(22) Date of filing: 21.09.2020
(51) Int. Cl.: G06F 9/48

(54) **PROCESS PROCESSING METHOD AND APPARATUS, ELECTRONIC DEVICE, AND COMPUTER READABLE STORAGE MEDIUM**

(30) Priority: 24.09.2019 CN 201910907661
(71) Applicant: ALIBABA GROUP HOLDING LIMITED, George Town, Grand Cayman (KY)
(72) Inventor: XU, Yun, Hangzhou, Zhejiang 311121 (CN); SHEN, Yibin, Hangzhou, Zhejiang 311121 (CN)
(74) Representative: Finnegan Europe LLP
(86) International application number: PCT/CN2020/116405
(87) International publication number: WO 2021/057640

(57) **Abstract**

Embodiments of present disclosure discloses a method, an apparatus, an electronic device, and a computer-readable storage medium for process handling. The method includes: detecting a blocking time of a kernel process in response to an ending of handling a current interrupt event in an interrupt queue; triggering a soft interrupt event of a virtual processor when the blocking time of the kernel process exceeds a preset time threshold; and sending an intermediate start instruction to the virtual processor in response to the soft interrupt event of the virtual processor being triggered, to make the virtual processor run for a preset time period. This technical solution can realize a compensating running for the virtual processor in the context of soft interrupts. Therefore, a phenomenon of long-time blocking and a single long-time jitter of the virtual processor are avoided under the premise of ensuring the stability and security of data and resources.

## Description

### CROSS-REFERENCE TO RELATED APPLICATIONS

The disclosure claims the benefits of priority to Chinese Patent Application No. 201910907661.5, filed on September 24, 2019, titled "Method, apparatus, electronic device, and computer-readable storage medium for process handling", which is incorporated herein by reference in its entirety.

### TECHNICAL FIELD

The present disclosure generally relates to the technical field of process handling, and more particularly, to a method, an apparatus, an electronic device, and a computer-readable storage medium for process handling.

### BACKGROUND

With the development of data technology, in order to improve efficiency and security of data usage, the concept of Virtual Machine (VM) came into being. A virtual machine is a complete computer system simulated by software with full hardware system functions and can run in a completely isolated environment. Under a Kernel-based Virtual Machine (KVM) architecture, a virtual processor (vCPU) runs as an ordinary process. Of course, there are also some systems and operation and maintenance programs on a host machine. If the systems and operation and maintenance programs are running at the same time while the virtual processor is running, there will be a contention for virtual processor resources. If the systems and operation and maintenance programs are running in a kernel mode without actively releasing resources, it can cause a single long-time jitter phenomenon of the virtual processor. To solve the problem of resource contention, kernel preemption is usually used. However, kernel preemption just provides more points of time for preemption and cannot realize resource preemption at any moment. In addition, the implementation of kernel preemption also brings changes to the entire kernel and introduces more challenges regarding stability and security.

### SUMMARY OF THE DISCLOSURE

A method, an apparatus, an electronic device, and a computer-readable storage medium for process handling are provided according to some embodiments of the present disclosure.

In a first aspect, a method for process handling is provided according to some embodiments of the present disclosure.

Specifically, the process handling method includes: detecting a blocking time of a kernel process in response to an ending of handling a current interrupt event in an interrupt queue; triggering a soft interrupt event of a virtual processor when the blocking time of the kernel process exceeds a preset time threshold; and sending an intermediate start instruction to the virtual processor in response to the soft interrupt event of the virtual processor being triggered, to make the virtual processor run for a preset time period.

In combination with the foregoing implementation, before detecting the blocking time of the kernel process in response to the end of handling of the soft interrupt event, the method further includes: handling a current interrupt event in an interrupt queue in response to detecting the interrupt event being triggered.

In combination with the foregoing implementations, before handling the current interrupt event in the interrupt queue in response to detecting the interrupt event being triggered, the method further includes: acquiring a run queue corresponding to the kernel process, and executing the run queue in units of preset running units of the virtual processor, according to an arrangement sequence of the preset running units in the run queue, until a process scheduling command is received, wherein one or more preset running units of the virtual processor are placed in the run queue.

In combination with the foregoing implementations, before acquiring the run queue corresponding to the kernel process, and executing the run queue in units of preset running units of the virtual processor, according to an arrangement sequence of the preset running units in the run queue, until a process scheduling command is received, the method further includes: initializing the kernel process.

In combination with the foregoing implementations, initializing the kernel process includes: creating the kernel process; in response to receiving a mount request sent by the virtual processor, placing one or more preset running units of the virtual processor in the run queue corresponding to the kernel process, and sending a mount success message to the virtual processor; and starting the kernel process in response to receiving a kernel process wake-up request sent by the virtual processor.

In combination with the foregoing implementations, the method further includes: in response to receiving a preset running request, sending an intermediate wake-up request to the virtual processor, and entering a sleep state after receiving a wake-up success message sent by the virtual processor, wherein the intermediate wake-up request carries information about the preset running request; and entering a running state in response to receiving a preset running request handling end message sent by the virtual processor.

In combination with the foregoing implementations, the method further includes: handling a next interrupt event in the interrupt queue in response to an end of the preset time period.

In a second aspect, a method for process handling is provided according to some embodiments of the present disclosure.

Specifically, the process handling method includes: initializing a virtual processor; starting an intermediate running in response to receiving an intermediate start instruction sent by a virtual machine monitor, wherein a length of time for the intermediate running is a preset time period; and stopping the intermediate running in response to an ending of the preset time period.

In combination with the foregoing implementation, initializing a virtual processor includes: generating one or more preset running units; sending a mount request to the virtual machine monitor to place the one or more preset running units in a run queue corresponding to a kernel process of the virtual machine monitor; and in response to receiving a mount success message sent by the virtual machine monitor, sending a kernel process wake-up request to the virtual machine monitor and entering a sleep state, so that the virtual machine monitor starts the kernel process.

In combination with the foregoing implementations, the method further includes: in response to receiving an intermediate wake-up request sent by the virtual machine monitor, entering an intermediate running state from the sleep state, and sending a wake-up success message to the virtual machine monitor, wherein the intermediate wake-up request carries information about a preset running request; and executing the preset running request, and after an end of handling the preset running request, sending a preset running request handling end message to the virtual machine monitor to enter the sleep state.

In a third aspect, a method for process handling is provided according to some embodiments of the present disclosure.

Specifically, the process handling method includes: initializing a kernel process of a virtual machine monitor and a virtual processor; performing an intermediate start on the virtual processor when an interrupt event of the kernel process is triggered and a preset condition is met, so that the virtual processor runs for a preset time period; and handling, by the virtual machine monitor, a next interrupt event in an interrupt queue in response to an ending of the preset time period.

In combination with the foregoing implementations, initializing the kernel process of the virtual machine monitor further includes: creating the kernel process; in response to receiving a mount request sent by the virtual processor, placing one or more preset running units of the virtual processor in a run queue corresponding to the kernel process, and sending a mount success message to the virtual processor; and starting the kernel process in response to receiving a kernel process wake-up request sent by the virtual processor.

In combination with the foregoing implementations, initializing a virtual processor further includes: generating one or more preset running units; sending a mount request to the virtual machine monitor to place the one or more preset running units in a run queue corresponding to the kernel process of the virtual machine monitor; and in response to receiving a mount success message sent by the virtual machine monitor, sending a kernel process wake-up request to the virtual machine monitor and entering a sleep state, so that the virtual machine monitor starts the kernel process.

In combination with the foregoing implementations, performing the intermediate start on the virtual processor when the interrupt event of the kernel process is triggered and a preset condition is met includes: detecting, by the virtual machine monitor, the blocking time of the kernel process in response to an end of the handling of a current interrupt event in the interrupt queue; triggering, by the virtual machine monitor, a soft interrupt event of the virtual processor when the blocking time of the kernel process exceeds a preset time threshold; sending, by the virtual machine monitor, an intermediate start instruction to the virtual processor in response to that the soft interrupt event of the virtual processor is triggered; starting, by the virtual processor, an intermediate running in response to receiving the intermediate start instruction sent by the virtual machine monitor, wherein the length of time for the intermediate running is a preset time period; and stopping, by the virtual processor, the intermediate running in response to an ending of the preset time period.

In combination with the foregoing implementations, before detecting, by the virtual machine monitor, the blocking time of the kernel process in response to an end of the handling of the current interrupt event in the interrupt queue, the method further includes: handling, by the virtual machine monitor, the current interrupt event in the interrupt queue in response to detecting the interrupt event being triggered.

In combination with the foregoing implementations, before handling, by the virtual machine monitor, the current interrupt event in the interrupt queue in response to detecting that interrupt event being triggered, the method further includes: acquiring, by the virtual machine monitor, a run queue corresponding to the kernel process, and executing the run queue in units of preset running units of the virtual processor, according to an arrangement sequence of preset running units in the run queue, until a process scheduling command is received, wherein one or more preset running units of the virtual processor are placed in the run queue.

In combination with the foregoing implementations, the method further includes: performing, by the virtual machine monitor, an intermediate wake-up for the virtual processor in response to receiving a preset running request.

In combination with the foregoing implementations, performing, by the virtual machine monitor, the intermediate wake-up for the virtual processor in response to receiving the preset running request includes: sending, by the virtual machine monitor, an intermediate wake-up request to the virtual processor in response to receiving the preset running request, wherein the intermediate wake-up request carries information about the preset running request; in response to receiving the intermediate wake-up request sent by the virtual machine monitor, the virtual processor entering an intermediate running state from a sleep state, and sending a wake-up success message to the virtual machine monitor; the virtual machine monitor entering the sleep state after receiving the wake-up success message sent by the virtual processor; the virtual processor executing the preset running request, and after the handling of the preset running request ends, sending a preset running request handling end message to the virtual machine monitor to enter the sleep state; and the virtual machine monitor entering a running state in response to receiving the preset running request handling end message sent by the virtual processor.

In a fourth aspect, an apparatus for process handling is provided according to some embodiments of the present disclosure.

Specifically, the process handling apparatus includes: a detecting module configured to detect the blocking time of a kernel process in response to an end of the handling of a current interrupt event in an interrupt queue; a triggering module configured to trigger a soft interrupt event of a virtual processor when the blocking time of the kernel process exceeds a preset time threshold; and a first sending module configured to send an intermediate start instruction to the virtual processor in response to that the soft interrupt event of the virtual processor is triggered, so that the virtual processor runs for a preset time period.

In combination with the foregoing implementation, before the detecting module, the apparatus further includes: a first handling module configured to handle the current interrupt event in the interrupt queue in response to detecting an interrupt event being triggered.

In combination with the foregoing implementations, before the detecting module, the apparatus further includes: a first running module configured to acquire a run queue corresponding to the kernel process, and execute the run queue in units of preset running units of the virtual processor, according to an arrangement sequence of preset running units in the run queue, until a process scheduling command is received, wherein one or more preset running units of the virtual processor are placed in the run queue.

In combination with the foregoing implementations, before the first running module, the apparatus further includes: a first initializing module configured to initialize the kernel process.

In combination with the foregoing implementations, the first initializing module further includes: a creating sub-module configured to create the kernel process; a mount sub-module configured to, in response to receiving a mount request sent by the virtual processor, place one or more preset running units of the virtual processor in the run queue corresponding to the kernel process, and send a mount success message to the virtual processor; and a first starting sub-module configured to start the kernel process in response to receiving a kernel process wake-up request sent by the virtual processor.

In combination with the foregoing implementations, the apparatus further includes: a second sending module configured to, in response to receiving a preset running request, send an intermediate wake-up request to the virtual processor, and enter a sleep state after receiving a wake-up success message sent by the virtual processor, wherein the intermediate wake-up request carries information about the preset running request; and a second running module configured to enter a running state in response to receiving a preset running request handling end message sent by the virtual processor.

In combination with the foregoing implementations, the apparatus further includes: a second handling module configured to handle a next interrupt event in the interrupt queue in response to an end of the preset time period.

In a fifth aspect, an apparatus for process handling is provided according to some embodiments of the present disclosure.

Specifically, the process handling apparatus includes: a second initializing module configured to initialize a virtual processor; a first starting module configured to start an intermediate running in response to receiving an intermediate start instruction sent by a virtual machine monitor, wherein the length of time for the intermediate running is a preset time period; and a stopping module configured to stop the intermediate running in response to an end of the preset time period.

In combination with the foregoing implementations, the second initializing module further includes: a generating sub-module configured to generate one or more preset running units; a first sending sub-module configured to send a mount request to the virtual machine monitor to place the one or more preset running units in a run queue corresponding to a kernel process of the virtual machine monitor; and a second sending sub-module configured to, in response to receiving a mount success message sent by the virtual machine monitor, send a kernel process wake-up request to the virtual machine monitor and enter a sleep state, so that the virtual machine monitor starts the kernel process.

In combination with the foregoing implementations, the apparatus further includes: a third sending module configured to, in response to receiving an intermediate wake-up request sent by the virtual machine monitor, enter an intermediate running state from the sleep state, and send a wake-up success message to the virtual machine monitor, wherein the intermediate wake-up request carries information about a preset running request; and a third running module configured to run the preset running request, and after the handling of the preset running request ends, send a preset running request handling end message to the virtual machine monitor to enter the sleep state.

In a sixth aspect, an apparatus for process handling is provided according to some embodiments of the present disclosure.

Specifically, the process handling apparatus includes: a third initializing module configured to initialize a kernel process of a virtual machine monitor and a virtual processor; a second starting module configured to perform an intermediate start on the virtual processor when an interrupt event of the kernel process is triggered and a preset condition is met, so that the virtual processor runs for a preset time period; and a third handling module configured to handle a next interrupt event in an interrupt queue in response to an end of the preset time period.

In combination with the foregoing implementations, part of initializing the kernel process of the virtual machine monitor in the third initializing module is configured to: create the kernel process; in response to receiving a mount request sent by the virtual processor, place one or more preset running units of the virtual processor in a run queue corresponding to the kernel process, and send a mount success message to the virtual processor; and start the kernel process in response to receiving a kernel process wake-up request sent by the virtual processor.

In combination with the foregoing implementations, a part of initializing the virtual processor in the third initializing module is configured to: generate one or more preset running units; send a mount request to the virtual machine monitor to place the one or more preset running units in a run queue corresponding to the kernel process of the virtual machine monitor; and in response to receiving a mount success message sent by the virtual machine monitor, send a kernel process wake-up request to the virtual machine monitor and enter a sleep state, so that the virtual machine monitor starts the kernel process.

In combination with the foregoing implementations, the second starting module includes: a detecting sub-module configured to detect the blocking time of the kernel process in response to an end of the handling of a current interrupt event in the interrupt queue; a triggering sub-module configured to trigger a soft interrupt event of the virtual processor when the blocking time of the kernel process exceeds a preset time threshold; a third sending sub-module configured to send an intermediate start instruction to the virtual processor in response to that the soft interrupt event of the virtual processor is triggered; a second starting sub-module configured to start an intermediate running in response to receiving an intermediate start instruction sent by the virtual machine monitor, wherein the length of time for the intermediate running is a preset time period; and a stopping sub-module configured to stop the intermediate running in response to an end of the preset time period.

In combination with the foregoing implementations, before the detecting sub-module, the apparatus further includes: a handling sub-module configured to handle the current interrupt event in the interrupt queue in response to detecting that an interrupt event is triggered.

In combination with the foregoing implementations, before the handling sub-module, the apparatus further includes: a first running sub-module configured to acquire a run queue corresponding to the kernel process, and execute the run queue in units of preset running units of the virtual processor, according to an arrangement sequence of preset running units in the run queue, until a process scheduling command is received, wherein one or more preset running units of the virtual processor are placed in the run queue.

In combination with the foregoing implementations, the apparatus further includes: a wake-up module configured to perform an intermediate wake-up for the virtual processor in response to receiving a preset running request.

In combination with the foregoing implementations, the wake-up module further includes: a fourth sending sub-module configured to send an intermediate wake-up request to the virtual processor in response to receiving the preset running request, wherein the intermediate wake-up request carries information about the preset running request; a fifth sending sub-module configured to, in response to receiving the intermediate wake-up request sent by the virtual machine monitor, enter an intermediate running state from a sleep state, and send a wake-up success message to the virtual machine monitor; a first status changing sub-module configured to enter the sleep state after receiving the wake-up success message sent by the virtual processor; a second running sub-module configured to run the preset running request, and after the handling of the preset running request ends, send a preset running request handling end message to the virtual machine monitor to enter the sleep state; and a second status changing sub-module configured to enter a running state in response to receiving the preset running request handling end message sent by the virtual processor.

In a seventh aspect, an electronic device is provided according to some embodiments of the present disclosure, the electronic device includes: a memory and a processor, wherein the memory is configured to store one or more computer instructions that support a process handling apparatus to perform the process handling methods described above, and the processor is configured for executing the computer instructions stored in the memory. The process handling apparatus may also include a communication interface for the process handling apparatus to communicate with other devices or communication networks.

In an eighth aspect, a computer-readable storage medium for storing computer instructions used by a process handling apparatus is provided according to some embodiments of the present disclosure, the computer-readable storage medium includes computer instructions related to the process handling apparatus for performing the process handling methods described above.

The technical solution provided by the embodiments of the present disclosure includes the following beneficial effects. The above technical solution includes determining whether an intermediate start is required for a virtual processor by detecting the blocking time of a kernel process when an interrupt event is handled, and performing the intermediate start on the virtual processor when a preset condition is met. This technical solution can realize a compensating running for the virtual processor in the context of soft interrupts. Therefore, a phenomenon of long-time blocking and a single long-time jitter of the virtual processor are avoided under the premise of ensuring the stability and security of data and resources.

It should be understood that the above general description and the following detailed description are only exemplary and explanatory, and do not limit the embodiments of the present disclosure.

### BRIEF DESCRIPTION OF THE DRAWINGS

Embodiments and various aspects of the present disclosure are illustrated in the following detailed description and the accompanying figures. Various features shown in the figures are not drawn to scale.
**FIG. 1** shows an exemplary flow chart of a process handling method according to some embodiments of the present disclosure.
**FIG. 2** shows an exemplary flow chart of process handling method according to some embodiments of the present disclosure.
**FIG. 3** shows an exemplary flow chart of process handling method according to some embodiments of the present disclosure.
**FIG. 4** shows an exemplary flow chart of process handling method according to some embodiment of the present disclosure.
**FIG. 5** shows an exemplary flow chart of step S401 in the process handling method according to the embodiment shown in **FIG. 4**.
**FIG. 6** shows an exemplary flow chart of process handling method according to some embodiments of the present disclosure.
**FIG. 7** shows an exemplary flow chart of process handling method according to some embodiments of the present disclosure.
**FIG. 8** shows an exemplary flow chart of process handling method according to some embodiments of the present disclosure.
**FIG. 9** shows an exemplary flow chart of step S801 in the process handling method according to the embodiment shown in **FIG. 8**.
**FIG. 10** shows an exemplary flow chart of process handling method according to some embodiments of the present disclosure.
**FIG. 11** shows an exemplary flow chart of process handling method according to some embodiments of the present disclosure.
**FIG. 12** shows an exemplary flow chart of step S1102 of the process handling method according to the embodiment shown in **FIG. 11**.
**FIG. 13** shows another exemplary flow chart of step S1102 of the process handling method according to the embodiment shown in **FIG. 11****.**
**FIG. 14** shows yet another exemplary flow chart of step S1102 of the process handling method according to the embodiment shown in **FIG. 11****.**
**FIG. 15** shows an exemplary flow chart of a process handling method according to some embodiments of the present disclosure.
**FIG. 16** shows an exemplary flow chart of step S1504 of the process handling method according to the embodiment shown in **FIG. 15**.
**FIG. 17** shows an exemplary structural block diagram of a process handling apparatus according to some embodiments of the present disclosure.
**FIG. 18** shows an exemplary structural block diagram of process handling apparatuses according to some embodiments of the present disclosure.
**FIG. 19** shows an exemplary structural block diagram of process handling apparatuses according to some embodiments of the present disclosure.
**FIG. 20** shows an exemplary structural block diagram of process handling apparatuses according to some embodiments of the present disclosure.
**FIG. 21** shows an exemplary structural block diagram of first initializing module 2001 according to the embodiment shown in **FIG. 20**.
**FIG. 22** shows an exemplary structural block diagram of process handling apparatuses according to different embodiments of the present disclosure.
**FIG. 23** shows an exemplary structural block diagram of process handling apparatuses according to some embodiments of the present disclosure.
**FIG. 24** shows an exemplary structural block diagram of process handling apparatuses according to some embodiments of the present disclosure.
**FIG. 25** shows an exemplary structural block diagram of second initializing module 2401 according to the embodiment shown in **FIG. 24**.
**FIG. 26** shows an exemplary structural block diagram of a process handling apparatus according to some embodiments of the present disclosure.
**FIG. 27** shows an exemplary structural block diagram of a process handling apparatus according to some embodiments of the present disclosure.
**FIG. 28** shows an exemplary structural block diagram of second starting module 2702 according to the embodiment shown in **FIG. 27**.
**FIG. 29** shows another exemplary structural block diagram of second starting module 2702 according to the embodiment shown in **FIG. 27**.
**FIG. 30** shows yet another exemplary structural block diagram of second starting module 2702 according to the embodiment shown in **FIG. 27**.
**FIG. 31** shows an exemplary structural block diagram of a process handling apparatus according to some embodiments of the present disclosure.
**FIG. 32** shows an exemplary structural block diagram of wake-up module 3104 according to the embodiment shown in **FIG. 31**.
**FIG. 33** shows an exemplary flow chart of a process handling method in one application scenario.
**FIG. 34** shows an exemplary structural block diagram of an electronic device according to some embodiments of the present disclosure.
**FIG. 35** is an exemplary schematic structural diagram of a computer system suitable for implementing a process handling method according to some embodiments of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims. Particular aspects of the present disclosure are described in greater detail below. The terms and definitions provided herein control, if in conflict with terms and/or definitions incorporated by reference.

It should be noted that the terms "include," "comprise," or any other variations thereof are intended to cover non-exclusive inclusion, so that a commodity or system including a series of elements not only includes the elements, but also includes other elements not explicitly listed, or further includes elements inherent to the commodity or system. In the absence of more limitations, an element defined by "including a/an ..." does not exclude that the commodity or system including the element further has other identical elements.

It should also be noted that provided that there is no conflict, the embodiments in the present disclosure and the features in the embodiments can be combined with each other. The embodiments of the present disclosure will be described in detail below with reference to the drawings and in conjunction with the embodiments.

The technical solution provided by the embodiments of the present disclosure includes determining whether an intermediate start is required for a virtual processor by detecting a blocking time of a kernel process when handling an interrupt event and performing the intermediate start on the virtual processor when a preset condition is met. This technical solution can realize a compensating running for the virtual processor in the context of soft interrupts. Therefore, a phenomenon of long-time blocking and a single long-time jitter of the virtual processor are avoided under the premise of ensuring the stability and security of data and resources.

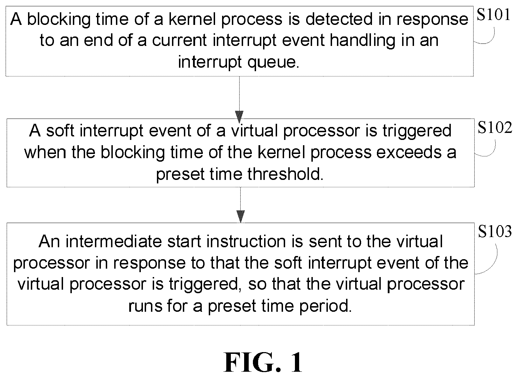

**FIG. 1** shows a flow chart of a process handling method according to some embodiments of the present disclosure, which is applied to a virtual machine monitor. As shown in **FIG. 1**, the process handling method includes the following steps S101-S103.

In step S101, a blocking time of a kernel process is detected in response to an end of a current interrupt event handling in an interrupt queue.

In step S102, a soft interrupt event of a virtual processor is triggered when the blocking time of the kernel process exceeds a preset time threshold.

In step S103, an intermediate start instruction is sent to the virtual processor in response to that the soft interrupt event of the virtual processor is triggered, so that the virtual processor runs for a preset time period.

As mentioned above, with the development of data technology, in order to improve the efficiency and security of data usage, the concept of virtual machine came into being. The virtual machine is a complete computer system simulated by software with full hardware system functions and running in a completely isolated environment. Under a KVM architecture, the virtual processor runs as an ordinary process. Of course, there are also some systems and operation and maintenance programs on the host machine. If the systems and operation and maintenance programs are running at the same time while the virtual processor is running, there may be a contention for virtual processor resources. If the systems and operation and maintenance programs are running in the kernel mode without actively releasing resources, it can cause a single long-time jitter phenomenon of the virtual processor. To solve the problem of resource contention, kernel preemption is usually used. However, kernel preemption just provides more points of time for preemption and cannot realize resource preemption at any moment. In addition, the implementation of kernel preemption also brings changes to the entire kernel and introduces more challenges regarding stability and security.

Considering the above problems, in this example, a process handling method is proposed. The method includes detecting a blocking time of a kernel process when handling an interrupt event; determining whether an intermediate start is required for a virtual processor; and performing the intermediate start on the virtual processor when a preset condition is met. This technical solution can realize a compensating running for the virtual processor in the context of soft interrupts. Therefore, a phenomenon of long-time blocking and a single long-time jitter of the virtual processor are avoided under the premise of ensuring the stability and security of data and resources.

In some embodiments of the present disclosure, the interrupt queue refers to a queue composed of interrupt events acquired by the virtual machine monitor, and the interrupt events in the interrupt queue are usually executed sequentially according to their order in the queue.

In order to avoid the phenomena of long-time blocking and single long-time jitter of the virtual processor, in some embodiments of the present disclosure, whenever the handling of an interrupt event in the interrupt queue ends, a detection of a blocking time of a kernel process is performed. If the blocking time of the kernel process exceeds a preset time threshold, it is considered that a long-time blocking phenomenon may occur in the virtual processor and an operation for compensating running on the virtual processor is required. Then, a soft interrupt event of the virtual processor is triggered, and an intermediate start instruction is sent to the virtual processor, so that the virtual processor runs for a preset time period. The preset time period refers to a duration for performing the compensatory running on the virtual processor. The value of the preset time period can be set according to the needs of practical applications and is not specifically limited herein. For example, the preset time period can be set to 0.1ms-0.5ms, etc. For example, if the preset time period is set to 0.1ms, it means that the virtual processor runs for 0.1ms as a compensation.

The preset time threshold is used to determine a length of the blocking time of the kernel process. The value of the preset time threshold can be set according to the needs of practical applications and is not specifically limited herein.

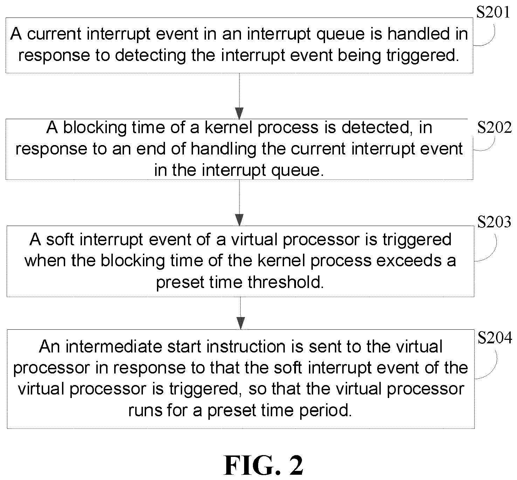

In some embodiments of the present disclosure, before step S101 that detecting a blocking time of a kernel process in response to an end of handling a current interrupt event in an interrupt queue, the method further includes a step of handling a current interrupt event in the interrupt queue in response to detecting the interrupt event being triggered. As shown in FIG. 2, the process handling method includes the following steps S201-S204.

In step S201, a current interrupt event in an interrupt queue is handled in response to detecting the interrupt event being triggered.

In step S202, a blocking time of a kernel process is detected, in response to an end of handling the current interrupt event in the interrupt queue.

In step S203, a soft interrupt event of a virtual processor is triggered when the blocking time of the kernel process exceeds a preset time threshold.

In step S204, an intermediate start instruction is sent to the virtual processor in response to that the soft interrupt event of the virtual processor is triggered, so that the virtual processor runs for a preset time period.

As mentioned above, there can be one or more interrupt events in the interrupt queue. Therefore, in this example, after an interrupt event being triggered is detected, a current interrupt event in the interrupt queue is handled according to the current time and the arrangement sequence of the interrupt events in the interrupt queue. The blocking time of the kernel process caused by the handling of the interrupt event is detected after the handling of the current interrupt event ends.

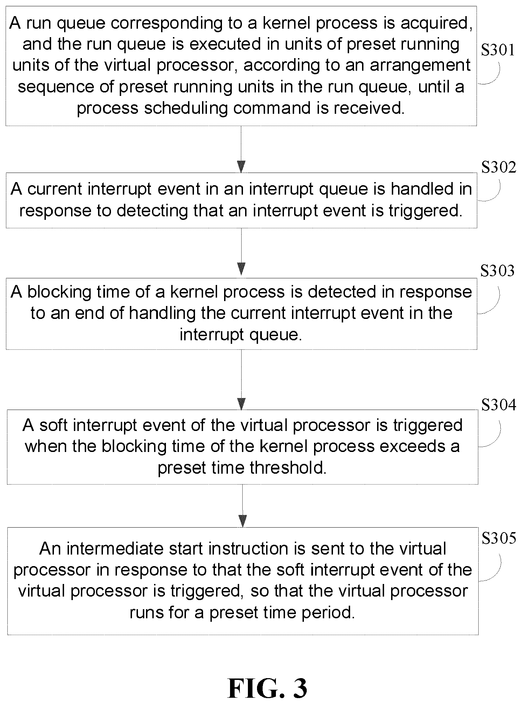

In some embodiments of the present disclosure, before step S201 that handling a current interrupt event in the interrupt queue in response to detecting the interrupt event being triggered, the method further includes a step of acquiring a run queue corresponding to the kernel process, and executing the run queue in units of preset running units of the virtual processor, according to an arrangement sequence of preset running units in the run queue, until a process scheduling command is received. As shown in FIG. 3, the process handling method can further include the following steps S301-S305.

In step S301, a run queue corresponding to a kernel process is acquired, and the run queue is executed in units of preset running units of the virtual processor, according to an arrangement sequence of preset running units in the run queue, until a process scheduling command is received. One or more preset running units of the virtual processor are placed in the run queue.

In step S302, a current interrupt event in an interrupt queue is handled in response to detecting that an interrupt event is triggered.

In step S303, a blocking time of a kernel process is detected in response to an end of handling the current interrupt event in the interrupt queue.

In step S304, a soft interrupt event of the virtual processor is triggered when the blocking time of the kernel process exceeds a preset time threshold.

In step S305, an intermediate start instruction is sent to the virtual processor in response to that the soft interrupt event of the virtual processor is triggered, so that the virtual processor runs for a preset time period.

For integrity of the handling of virtual processor data, in this example, the virtual processor data run in units of preset running units of the virtual processor. That is, a run queue corresponding to a kernel process is acquired and determined, and the run queue runs in units of preset running units of the virtual processor, according to an arrangement sequence of preset running units in the run queue, until a process scheduling command is received. The process scheduling command is sent to stop the running of the virtual processor. One or more preset running units of the virtual processor are placed in the run queue. In some embodiments of the present disclosure, the preset running units of the virtual processor can be formed by encapsulating minimum loops of running of the virtual processor.

In some embodiments of the present disclosure, one or more kernel processes can be provided in the virtual machine monitor. The number of the kernel processes can be determined by the number of physical processors. For example, the number of the kernel processes to be provided is the same as the number of physical processors. Each kernel process is responsible for maintaining one run queue.

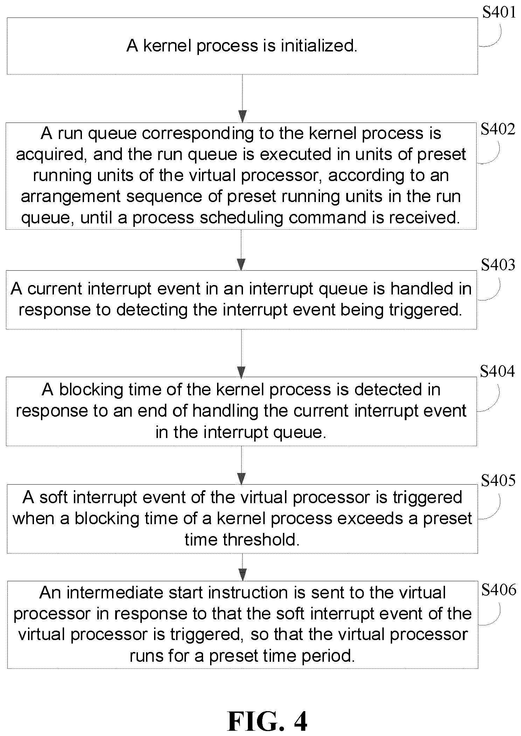

In some embodiments of the present disclosure, before step S301 that acquiring a run queue corresponding to a kernel process and running the run queue in units of preset running units of the virtual processor, according to an arrangement sequence of preset running units, in the run queue, until a process scheduling command is received, the method further includes a step of initializing the kernel process. As shown in **FIG. 4**, the process handling method can include the following steps S401-S406.

In step S401, a kernel process is initialized.

In step S402, a run queue corresponding to the kernel process is acquired, and the run queue is executed in units of preset running units of the virtual processor, according to an arrangement sequence of preset running units in the run queue, until a process scheduling command is received. One or more preset running units of the virtual processor are placed in the run queue.

In step S403, a current interrupt event in an interrupt queue is handled in response to detecting the interrupt event being triggered.

In step S404, a blocking time of the kernel process is detected in response to an end of handling the current interrupt event in the interrupt queue.

In step S405, a soft interrupt event of the virtual processor is triggered when a blocking time of a kernel process exceeds a preset time threshold.

In step S406, an intermediate start instruction is sent to the virtual processor in response to that the soft interrupt event of the virtual processor is triggered, so that the virtual processor runs for a preset time period.

In order to ensure the kernel process performing well, in this example, before the kernel process starts to work, an initialization is required for the kernel process.

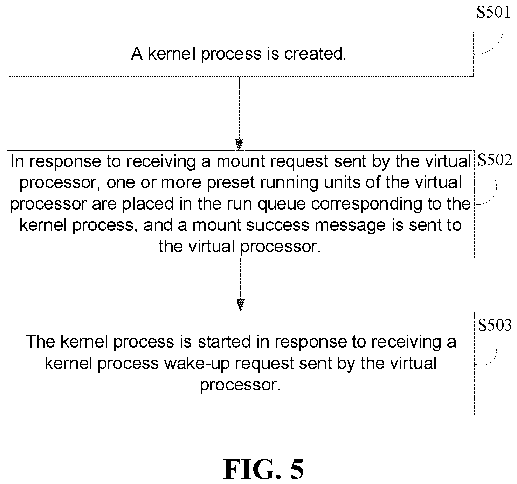

In some embodiments of the present disclosure, as shown in **FIG. 5**, step S401 that initializing the kernel process, can include the following steps S501-S503.

In step S501, a kernel process is created.

In step S502, in response to receiving a mount request sent by the virtual processor, one or more preset running units of the virtual processor are placed in the run queue corresponding to the kernel process, and a mount success message is sent to the virtual processor.

In step S503, the kernel process is started in response to receiving a kernel process wake-up request sent by the virtual processor.

In this example, when the kernel process is initialized, one or more kernel processes are created. For each kernel process, after receiving a mount request sent by the virtual processor, one or more preset running units of the virtual processor are placed in a run queue corresponding to the kernel process, and a mount success message is sent to the virtual processor. The mount request can include kernel process identification information and request body information. Therefore, the one or more preset running units of the virtual processor are placed in the run queue of the kernel process that corresponds to the kernel process identification information, according to the kernel process identification information, by a virtual machine monitor. Of course, the mount request can only include request body information. In this case, the virtual machine monitor randomly selects a kernel process for placing the one or more preset running units of the virtual processor, and then starts running the kernel process after receiving a kernel process wake-up request sent by the virtual processor.

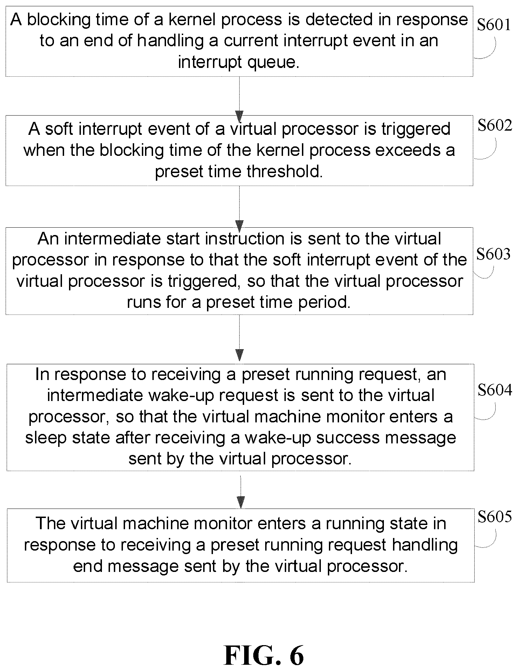

In some embodiments of the present disclosure, the method further includes a step of interacting with the virtual processor to execute a preset running request. As shown in **FIG. 6**, the process handling method can include the following steps S601-S605.

In step S601, a blocking time of a kernel process is detected in response to an end of handling a current interrupt event in an interrupt queue.

In step S602, a soft interrupt event of a virtual processor is triggered when the blocking time of the kernel process exceeds a preset time threshold.

In step S603, an intermediate start instruction is sent to the virtual processor in response to that the soft interrupt event of the virtual processor is triggered, so that the virtual processor runs for a preset time period.

In step S604, in response to receiving a preset running request, an intermediate wake-up request is sent to the virtual processor, so that the virtual machine monitor enters a sleep state after receiving a wake-up success message sent by the virtual processor. The intermediate wake-up request carries information about the preset running request.

In step S605, the virtual machine monitor enters a running state in response to receiving a preset running request handling end message sent by the virtual processor.

If the virtual machine monitor receives a running request that cannot be completed by the virtual machine monitor but can only be completed by the virtual processor, such as a user-mode-based running request, an intermediate wake-up request carrying information about the preset running request is required to send to the virtual processor. The virtual machine monitor enters a sleep state after receiving a wake-up success message sent by the virtual processor, and the preset running request is completed by the virtual processor. The virtual machine monitor enters a running state again after receiving a preset running request handling end message sent by the virtual processor.

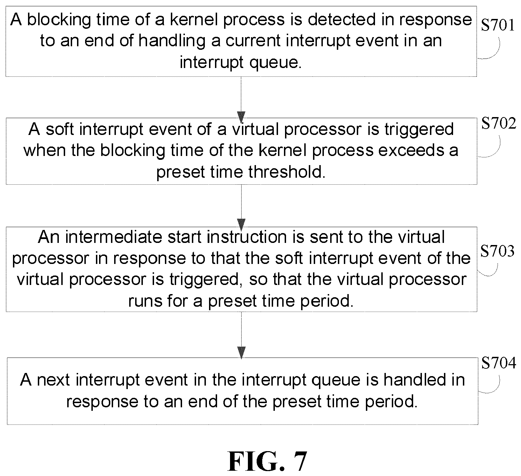

In some embodiments of the present disclosure, the method further includes a step of handling a next interrupt event in the interrupt queue in response to an end of the preset time period. As shown in **FIG. 7**, the process handling method can include the following steps S701-S704.

In step S701, a blocking time of a kernel process is detected in response to an end of handling a current interrupt event in an interrupt queue.

In step S702, a soft interrupt event of a virtual processor is triggered when the blocking time of the kernel process exceeds a preset time threshold.

In step S703, an intermediate start instruction is sent to the virtual processor in response to that the soft interrupt event of the virtual processor is triggered, so that the virtual processor runs for a preset time period.

In step S704, a next interrupt event in the interrupt queue is handled in response to an end of the preset time period.

In this example, after the preset time period in which the virtual processor performs an intermediate start, that is, after the intermediate start ends, the virtual machine monitor continues to handle a next interrupt event in the interrupt queue, and detects the blocking time of the kernel process after the next interrupt event is handled. If there is no next interrupt event in the interrupt queue, the virtual machine monitor continues to handle other processes.

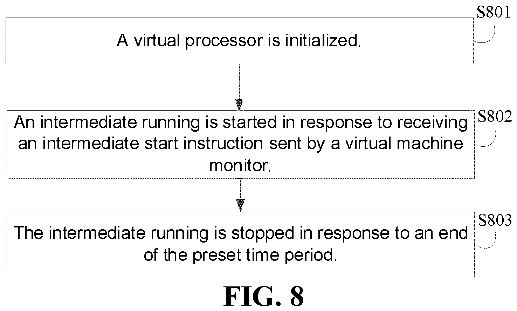

**FIG. 8** shows a flow chart of a process handling method according to some embodiments of the present disclosure, which is applied to a virtual processor. As shown in **FIG. 8**, the process handling method can include the following steps S801-S803.

In step S801, a virtual processor is initialized.

In step S802, an intermediate running is started in response to receiving an intermediate start instruction sent by a virtual machine monitor. The length of time for the intermediate running is a preset time period.

In step S803, the intermediate running is stopped in response to an end of the preset time period.

As mentioned above, under a KVM architecture, a virtual processor (vCPU) runs as an ordinary process. Of course, there are also some systems and operation and maintenance programs on a host machine. If the systems and operation and maintenance programs are running at the same time while the virtual processor is running, there will be a contention for virtual processor resources. If the systems and operation and maintenance programs are running in a kernel mode without actively releasing resources, it will cause a single long-time jitter phenomenon of the virtual processor. To solve the problem of resource contention, kernel preemption is usually used. However, kernel preemption just provides more points of time for preemption, and cannot realize resource preemption at any moment. In addition, the implementation of kernel preemption also brings changes to the entire kernel, and introduces more challenges regarding stability and security.

Considering the above problems, a process handling method is proposed according to some embodiments of the present disclosure. This method includes detecting a blocking time of a kernel process when handling an interrupt event by a virtual machine monitor; determining whether an intermediate start is required for a virtual processor; and performing an intermediate start on the virtual processor when a preset condition is met. This technical solution can realize a compensating running for the virtual processor in the context of soft interrupts. Therefore, a phenomenon of long-time blocking and a single long-time jitter of the virtual processor are avoided under the premise of ensuring the stability and security of data and resources.

In order to avoid the phenomena of long-time blocking and single long-time jitter of the virtual processor, in some embodiments, after the virtual processor is initialized and mounted on the virtual machine monitor, if an intermediate start instruction sent by the virtual machine monitor is received, an intermediate running is started. The length of time for the intermediate running of the virtual processor is a preset time period. After the preset time period ends, the intermediate running is stopped.

The preset time period refers to a duration for performing the operation of compensatory running on the virtual processor. The value of the preset time period can be set according to the needs of practical applications and is not specifically limited herein. For example, the preset time period can be set to 0.1ms-0.5ms, etc. For example, if the preset time period is set to 0.1ms, it means that the virtual processor runs for 0.1ms as a compensation.

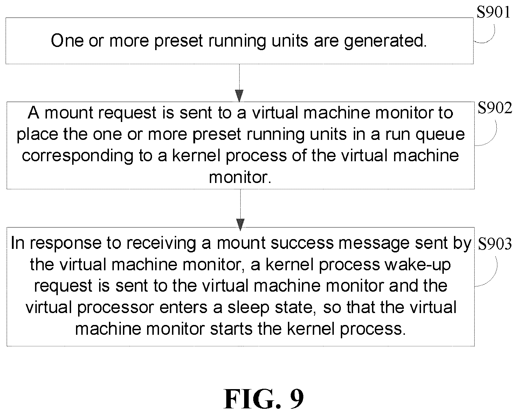

In some embodiments of the present disclosure, as shown in **FIG. 9**, the step S801 that initializing the virtual processor, can include the following steps S901-S903.

In step S901, one or more preset running units are generated.

In step S902, a mount request is sent to a virtual machine monitor to place the one or more preset running units in a run queue corresponding to a kernel process of the virtual machine monitor.

In step S903, in response to receiving a mount success message sent by the virtual machine monitor, a kernel process wake-up request is sent to the virtual machine monitor and the virtual processor enters a sleep state, so that the virtual machine monitor starts the kernel process.

In this example, when the virtual processor is initialized, one or more preset running units are generated by encapsulating minimum loops of running of the virtual processor. A mount request is sent to a virtual machine monitor to place the one or more preset running units in the run queue corresponding to a kernel process of the virtual machine monitor, such that the kernel process performs running operation. After a mount success message sent by the virtual machine monitor is received, a kernel process wake-up request is sent to the virtual machine monitor to wake up the kernel process, and the virtual processor then enters a sleep state.

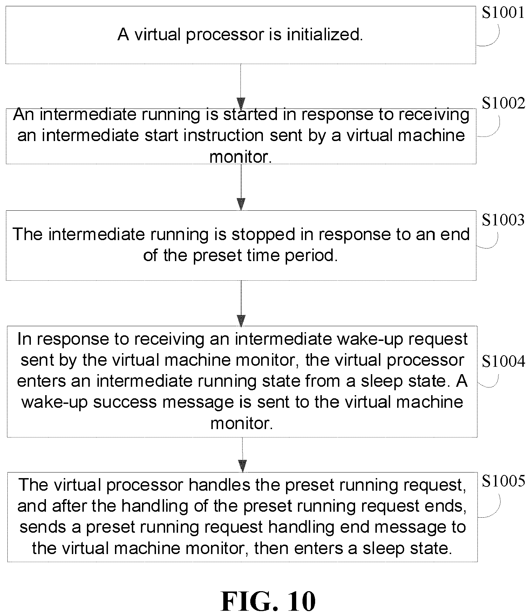

In some embodiments of the present disclosure, the method further includes a step of interacting with the virtual machine monitor to execute a preset running request. As shown in **FIG. 10**, the process handling method can include the following steps SI001-SI005.

In step S1001, a virtual processor is initialized.

In step S1002, an intermediate running is started in response to receiving an intermediate start instruction sent by a virtual machine monitor. The length of time for the intermediate running is a preset time period.

In step S1003, the intermediate running is stopped in response to an end of the preset time period.

In step S1004, in response to receiving an intermediate wake-up request sent by the virtual machine monitor, the virtual processor enters an intermediate running state from a sleep state. A wake-up success message is sent to the virtual machine monitor. The intermediate wake-up request carries information about a preset running request.

In step S1005, the virtual processor handles the preset running request, and after the handling of the preset running request ends, sends a preset running request handling end message to the virtual machine monitor, then enters a sleep state.

If the virtual machine monitor receives a running request that cannot be completed by the virtual machine monitor but can only be completed by the virtual processor, such as a user-mode-based running request, an intermediate wake-up request carrying information about the preset running request is required to send to the virtual processor. In this case, after receiving the intermediate wake-up request sent by the virtual machine monitor, the virtual processor enters an intermediate running state from the sleep state and sends a wake-up success message to the virtual machine monitor. Then the virtual processor handles the preset running request. After the handling of the preset running request ends, the virtual processor sends a preset running request handling end message to the virtual machine monitor to wake-up again the virtual machine monitor, and then the virtual processor enters the sleep state again.

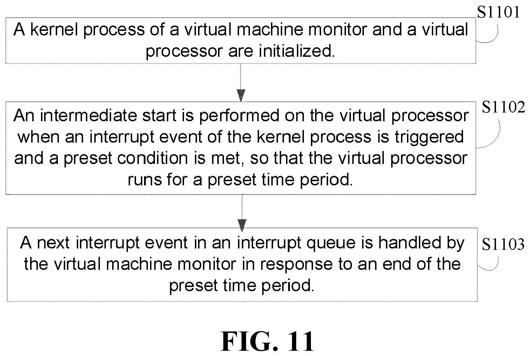

**FIG. 11** shows a flow chart of a process handling method according to some embodiments of the present disclosure, which is applied to a process handling system. The process handling system includes a virtual machine monitor and a virtual processor. As shown in **FIG. 11**, the process handling method can include the following steps S1 101-SI 103.

In step S1101, a kernel process of a virtual machine monitor and a virtual processor are initialized.

In step S1102, an intermediate start is performed on the virtual processor when an interrupt event of the kernel process is triggered and a preset condition is met, so that the virtual processor runs for a preset time period.

In step S1103, a next interrupt event in an interrupt queue is handled by the virtual machine monitor in response to an end of the preset time period.

As mentioned above, under a Kernel-based Virtual Machine (KVM) architecture, a virtual processor (vCPU) runs as an ordinary process. Of course, there are also some systems and operation and maintenance programs on a host machine. If the systems and operation and maintenance programs are running at the same time while the virtual processor is running, there will be a contention for virtual processor resources. If the systems and operation and maintenance programs are running in a kernel mode without actively releasing resources, it will cause a single long-time jitter phenomenon of the virtual processor. To solve the problem of resource contention, kernel preemption is usually used. However, kernel preemption just provides more points of time for preemption, and cannot realize resource preemption at any moment. In addition, the implementation of kernel preemption also brings changes to the entire kernel, and introduces more challenges regarding stability and security.

Considering the above problems, a process handling method is proposed according to some embodiments, The method includes determining, by a virtual machine monitor, whether an intermediate start is required for a virtual processor by detecting the blocking time of a kernel process when an interrupt event is handled, and performing an intermediate start on the virtual processor when a preset condition is met. This technical solution can realize a compensating running for the virtual processor in the context of soft interrupts. Therefore, a phenomenon of long-time blocking and a single long-time jitter of the virtual processor are avoided under the premise of ensuring the stability and security of data and resources.

In this example, a kernel process of a virtual machine monitor and a virtual processor are initialized. When an interrupt event of the kernel process of the virtual machine monitor is triggered and a preset condition is met, a compensating start of the virtual processor is required. However, in order not to have an adverse effect on the kernel process, the compensating start of the virtual processor only lasts for a preset time period. After the preset time period ends, the virtual machine monitor turns to handle a next interrupt event in an interrupt queue.

In some embodiments of the present disclosure, initializing the kernel process of the virtual machine monitor in step S1101 can further include: creating the kernel process; in response to receiving a mount request sent by the virtual processor; placing one or more preset running units of the virtual processor in the run queue corresponding to the kernel process; sending a mount success message to the virtual processor; and starting the kernel process in response to receiving a kernel process wake-up request sent by the virtual processor.

In order to ensure the kernel process performing well, in this example, an initialization is required for the kernel process, before the kernel process starts to work. Specifically, one or more kernel processes are created. For each kernel process, after a mount request sent by the virtual processor is received, one or more preset running units of the virtual processor are placed in a run queue corresponding to the kernel process. A mount success message is sent to the virtual processor. The mount request can include kernel process identification information and request body information. Therefore, the virtual machine monitor places the one or more preset running units of the virtual processor in the run queue of the kernel process according to the kernel process identification information. The kernel process corresponds to the kernel process identification information. Of course, the mount request can also only include the request body information. In this case, the virtual machine monitor randomly selects a kernel process for placing the one or more preset running units of the virtual processor, and starts a running the kernel process after receiving a kernel process wake-up request sent by the virtual processor.

In some embodiments of the present disclosure, initializing the virtual processor in step S1101 can further include: generating one or more preset running units; sending a mount request to the virtual machine monitor to place the one or more preset running units in a run queue corresponding to a kernel process of the virtual machine monitor; in response to receiving a mount success message sent by the virtual machine monitor, sending a kernel process wake-up request to the virtual machine monitor; and entering a sleep state, so that the virtual machine monitor starts the kernel process.

In order to ensure the virtual processor performing well, in this example, an initialization is required for the virtual processor, before the virtual processor starts to work. Specifically, when initializing the virtual processor, one or more preset running units are generated by encapsulating minimum loops of running of the virtual processor. A mount request is sent to the virtual machine monitor to place the one or more preset running units in the run queue corresponding to a kernel process of the virtual machine monitor, such that the kernel process performs running operation. After a mount success message sent by the virtual machine monitor is received, a kernel process wake-up request is sent to the virtual machine monitor to wake up the kernel process, and the virtual processor then enters a sleep state.

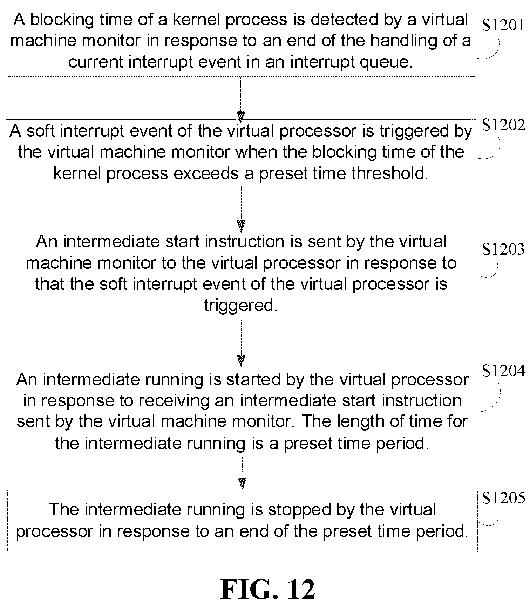

In some embodiments of the present disclosure, as shown in FIG. 12, the step S1102 that performing an intermediate start on the virtual processor when an interrupt event of the kernel process is triggered and a preset condition is met, includes the following steps S1201-S1205.

In step S1201, a blocking time of a kernel process is detected by a virtual machine monitor in response to an end of the handling of a current interrupt event in an interrupt queue.

In step S1202, a soft interrupt event of the virtual processor is triggered by the virtual machine monitor when the blocking time of the kernel process exceeds a preset time threshold.

In step S1203, an intermediate start instruction is sent by the virtual machine monitor to the virtual processor in response to that the soft interrupt event of the virtual processor is triggered.

In step S1204, an intermediate running is started by the virtual processor in response to receiving an intermediate start instruction sent by the virtual machine monitor. The length of time for the intermediate running is a preset time period.

In step S1205, the intermediate running is stopped by the virtual processor in response to an end of the preset time period.

In order to avoid the phenomena of long-time blocking and single long-time jitter of a virtual processor, in some embodiments of the present disclosure, whenever the handling of an interrupt event in the interrupt queue ends, a detection of a blocking time of a kernel process is performed. If the blocking time of the kernel process exceeds a preset time threshold, it is considered that the long-time blocking phenomenon may occur in the virtual processor and a compensating running of the virtual processor is required. Then, a soft interrupt event of the virtual processor is triggered and an intermediate start instruction is sent to the virtual processor. The virtual processor starts intermediate running after receiving the intermediate start instruction sent by the virtual machine monitor. The length of time for the intermediate running of the virtual processor is a preset time period. After the preset time period ends, the virtual processor stops the intermediate running.

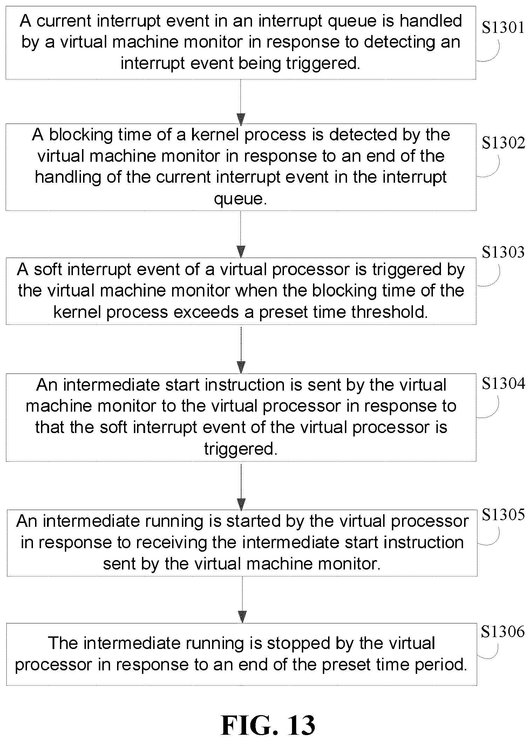

In some embodiments of the present disclosure, before the step S1201 that detecting, by the virtual machine monitor, the blocking time of a kernel process in response to an end of handling a current interrupt event in an interrupt queue, the method further includes a step of handling, by the virtual machine monitor, the current interrupt event in the interrupt queue in response to detecting the interrupt event being triggered. As shown in **FIG. 13**, the step S1102 that performing an intermediate start on the virtual processor when an interrupt event of the kernel process is triggered and a preset condition is met, includes the following steps S1301-S1306.

In step S1301, a current interrupt event in an interrupt queue is handled by a virtual machine monitor in response to detecting an interrupt event being triggered.

In step S1302, a blocking time of a kernel process is detected by the virtual machine monitor in response to an end of the handling of the current interrupt event in the interrupt queue.

In step S1303, a soft interrupt event of a virtual processor is triggered by the virtual machine monitor when the blocking time of the kernel process exceeds a preset time threshold.

In step S1304, an intermediate start instruction is sent by the virtual machine monitor to the virtual processor in response to that the soft interrupt event of the virtual processor is triggered.

In step S1305, an intermediate running is started by the virtual processor in response to receiving the intermediate start instruction sent by the virtual machine monitor. The length of time for the intermediate running is a preset time period.

In step S1306, the intermediate running is stopped by the virtual processor in response to an end of the preset time period.

As mentioned above, there can be one or more interrupt events in the interrupt queue. Therefore, in this example, after an interrupt event being triggered is detected, a current interrupt event in the interrupt queue is handled by the virtual machine monitor according to a current time and an arrangement sequence of the interrupt events in the interrupt queue. The blocking time of the kernel process caused by the handling of the interrupt event is detected again, after the handling of the current interrupt event ends.

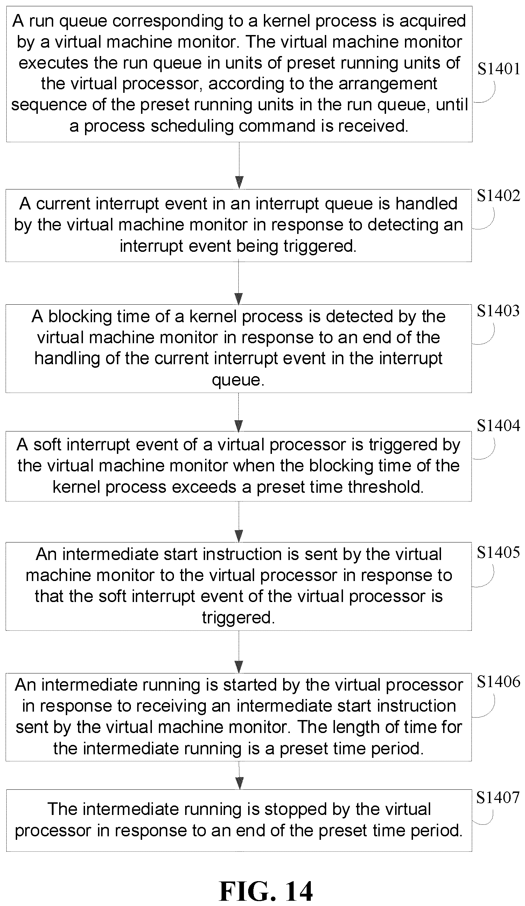

In some embodiments of the present disclosure, before the step S1301 that handling, by the virtual machine monitor, a current interrupt event in an interrupt queue in response to detecting that an interrupt event is triggered, the method further includes a step of acquiring, by the virtual machine monitor, a run queue corresponding to a kernel process, and running the run queue in units of preset running units of the virtual processor, according to an arrangement sequence of preset running units in the run queue, until a process scheduling command is received. As shown in **FIG. 14**, the step S1102 that performing an intermediate start on the virtual processor when an interrupt event of the kernel process is triggered and a preset condition is met, includes the following steps S1401-S1407.

In step S1401, a run queue corresponding to a kernel process is acquired by a virtual machine monitor. The virtual machine monitor executes the run queue in units of preset running units of the virtual processor, according to the arrangement sequence of the preset running units in the run queue, until a process scheduling command is received. One or more preset running units of the virtual processor are placed in the run queue.

In step S1402, a current interrupt event in an interrupt queue is handled by the virtual machine monitor in response to detecting an interrupt event being triggered.

In step S1403, a blocking time of a kernel process is detected by the virtual machine monitor in response to an end of the handling of the current interrupt event in the interrupt queue.

In step S1404, a soft interrupt event of a virtual processor is triggered by the virtual machine monitor when the blocking time of the kernel process exceeds a preset time threshold.

In step S1405, an intermediate start instruction is sent by the virtual machine monitor to the virtual processor in response to that the soft interrupt event of the virtual processor is triggered.

In step S1406, an intermediate running is started by the virtual processor in response to receiving an intermediate start instruction sent by the virtual machine monitor. The length of time for the intermediate running is a preset time period.

In step S1407, the intermediate running is stopped by the virtual processor in response to an end of the preset time period.

For integrity of the handling of virtual processor data, in this example, the virtual processor data is run by the virtual machine monitor in units of preset running units of the virtual processor. That is, a run queue corresponding to the kernel process is acquired and determined by the virtual machine monitor, and the virtual machine monitor executes the run queue in units of preset running units of the virtual processor, according to the arrangement sequence of the preset running units in the run queue, until a process scheduling command is received to stop the running of the virtual processor. One or more preset running units of the virtual processor are placed in the run queue. In some embodiments of the present disclosure, the preset running units of the virtual processor can be formed by encapsulating minimum loops of running of the virtual processor.

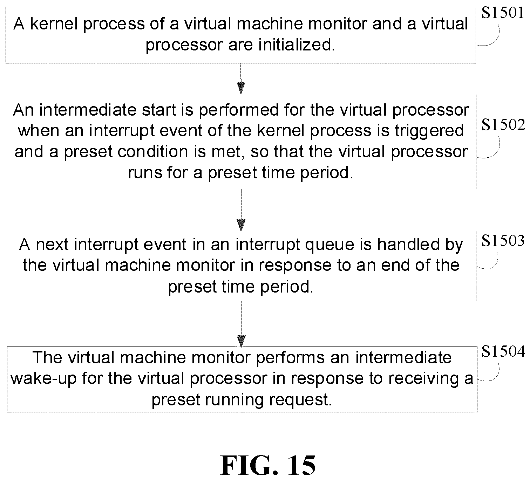

In some embodiments of the present disclosure, the method further includes a step of performing, by the virtual machine monitor, an intermediate wake-up for the virtual processor in response to receiving a preset running request. As shown in **FIG. 15**, the process handling method includes the following steps S1501-S1504.

In step S1501, a kernel process of a virtual machine monitor and a virtual processor are initialized.

In step S1502, an intermediate start is performed for the virtual processor when an interrupt event of the kernel process is triggered and a preset condition is met, so that the virtual processor runs for a preset time period.

In step S1503, a next interrupt event in an interrupt queue is handled by the virtual machine monitor in response to an end of the preset time period.

In step S1504, the virtual machine monitor performs an intermediate wake-up for the virtual processor in response to receiving a preset running request.

In this example, if the virtual machine monitor receives a running request that cannot be completed by the virtual machine monitor but can only be completed by the virtual processor, such as a user-mode-based running request, the virtual processor is required to wake up to enter a running state to handle the preset running request.

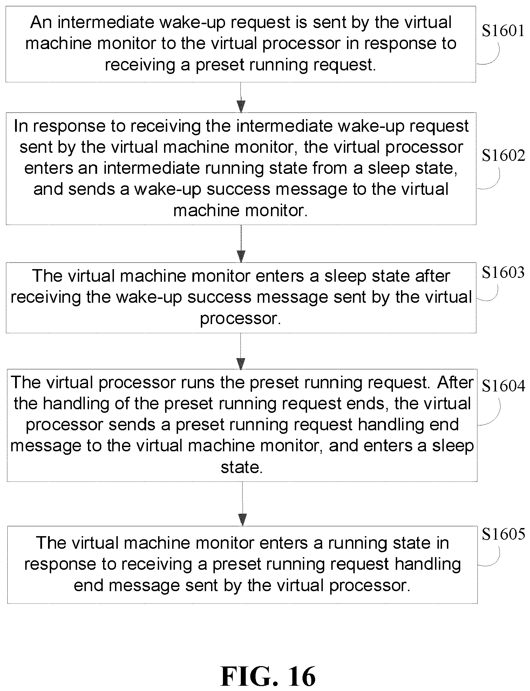

In some embodiments of the present disclosure, as shown in **FIG. 16**, step S1504 that performing, by the virtual machine monitor, an intermediate wake-up for the virtual processor in response to receiving a preset running request, includes the following steps S1601-S1605.

In step S1601, an intermediate wake-up request is sent by the virtual machine monitor to the virtual processor in response to receiving a preset running request. The intermediate wake-up request carries information about the preset running request.

In step S1602, in response to receiving the intermediate wake-up request sent by the virtual machine monitor, the virtual processor enters an intermediate running state from a sleep state, and sends a wake-up success message to the virtual machine monitor.

In step S1603, the virtual machine monitor enters a sleep state after receiving the wake-up success message sent by the virtual processor.

In step S1604, the virtual processor runs the preset running request. After the handling of the preset running request ends, the virtual processor sends a preset running request handling end message to the virtual machine monitor, and enters a sleep state.

In step S1605, the virtual machine monitor enters a running state in response to receiving a preset running request handling end message sent by the virtual processor.

When the virtual machine monitor receives a running request that cannot be completed by the virtual machine monitor but can only be completed by the virtual processor, an intermediate wake-up request carrying information about the preset running request is required to send to the virtual processor.. After receiving the intermediate wake-up request sent by the virtual machine monitor, the virtual processor enters an intermediate running state from a sleep state, and sends a wake-up success message to the virtual machine monitor. The virtual machine monitor enters a sleep state after receiving the wake-up success message sent by the virtual processor, so that the preset running request is turned to be completed by the virtual processor. The virtual processor runs the preset running request, and after the handling of the preset running request ends, the virtual processor sends a preset running request handling end message to the virtual machine monitor, and enters the sleep mode. The virtual machine monitor resumes to a running state after receiving the preset running request handling end message sent by the virtual processor.

The following are apparatus embodiments of the present disclosure, which can be used to implement the method embodiments of the present disclosure.

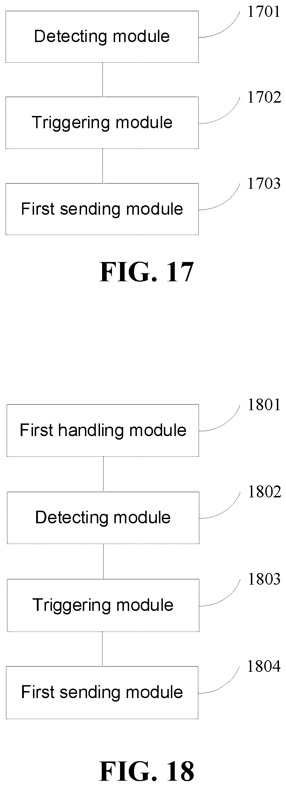

**FIG. 17** shows a structural block diagram of a process handling apparatus according to some embodiments of the present disclosure. The apparatus can be implemented as part or all of an electronic device by software, hardware, or a combination of the two. For example, the apparatus can be implemented as a virtual machine monitor. As shown in FIG. 17, the process handling apparatus includes a detecting module 1701, a triggering module 1702, and a first sending module 1703. It is understandable that each module can include one or more hardware components, for example, circuitry, for performing corresponding functions.

Detecting module 1701 is configured to detect a blocking time of a kernel process in response to an end of the handling of a current interrupt event in an interrupt queue.

Triggering module 1702 is configured to trigger a soft interrupt event of a virtual processor when a blocking time of the kernel process exceeds a preset time threshold.

First sending module 1703 is configured to send an intermediate start instruction to the virtual processor in response to that the soft interrupt event of the virtual processor is triggered, so that the virtual processor runs for a preset time period.

As mentioned above, with the development of data technology, in order to improve the efficiency and security of data usage, the concept of virtual machine came into being. A virtual machine is a complete computer system simulated by software with full hardware system functions and running in a completely isolated environment. Under a KVM architecture, a virtual processor runs as an ordinary process. Of course, there are also some systems and operation and maintenance programs on a host machine. If the systems and operation and maintenance programs are running at the same time while the virtual processor is running, there will be a contention for virtual processor resources. If the systems and operation and maintenance programs are running in a kernel mode without actively releasing resources, it will cause a single long-time jitter phenomenon of the virtual processor. To solve the problem of resource contention, kernel preemption is usually used. However, kernel preemption just provides more points of time for preemption, and cannot realize resource preemption at any moment. In addition, the implementation of kernel preemption also brings changes to the entire kernel, and introduces more challenges regarding stability and security.

Considering the above problems, a process handling apparatus is proposed according to some embodiments of the present disclosure. This apparatus is configured to detect a blocking time of a kernel process when handling an interrupt event; determine whether an intermediate start is required for a virtual processor; and perform an intermediate start on the virtual processor when a preset condition is met. This technical solution can realize a compensating running for the virtual processor in the context of soft interrupts. Therefore, a phenomenon of long-time blocking and a single long-time jitter of the virtual processor are avoided under the premise of ensuring the stability and security of data and resources.

In some embodiments of the present disclosure, the interrupt queue refers to a queue composed of interrupt events acquired by the virtual machine monitor, and the interrupt events in the interrupt queue are usually executed sequentially according to their order in the queue.

In order to avoid the phenomena of long-time blocking and single long-time jitter of the virtual processor, in some embodiments of the present disclosure, whenever the handling of an interrupt event in the interrupt queue ends, detecting module 1701 detects a blocking time of a kernel process. If the blocking time of the kernel process exceeds a preset time threshold, it is considered that the long-time blocking phenomenon may occur in the virtual processor and performing an operation of compensating running on the virtual processor is required. Then, triggering module 1702 triggers a soft interrupt event of the virtual processor, and then first sending module 1703 sends an intermediate start instruction to the virtual processor, so that the virtual processor runs for a preset time period. The preset time period refers to a duration for performing the compensatory running on the virtual processor. The value of the preset time period can be set according to the needs of practical applications and is not specifically limited herein. For example, the preset time period can be set to 0. 1ms-0.5ms, etc. For example, if the preset time period is set to 0.1ms, it means that the virtual processor runs for 0.1ms as a compensation.

The preset time threshold is used to determine a length of the blocking time of the kernel process. The value of the preset time threshold can be set according to the needs of practical applications and is not specifically limited herein.

In some embodiments of the present disclosure, before detecting module 1701 detects a blocking time of a kernel process, the apparatus further includes a part configured to handle the current interrupt event in the interrupt queue in response to detecting the interrupt event being triggered. As shown in **FIG. 18**, the process handling apparatus further includes a first handling module 1801, a detecting module 1802, a triggering module 1803, and a first sending module 1804.

First handling module 1801 is configured to handle a current interrupt event in an interrupt queue in response to detecting an interrupt event being triggered.

Detecting module 1802 is configured to detect a blocking time of a kernel process in response to an end of the handling of the current interrupt event in the interrupt queue.

Triggering module 1803 is configured to trigger a soft interrupt event of a virtual processor when the blocking time of the kernel process exceeds a preset time threshold.

First sending module 1804 is configured to send an intermediate start instruction to the virtual processor in response to that the soft interrupt event of the virtual processor is triggered, so that the virtual processor runs for a preset time period.

As mentioned above, there may be one or more interrupt events in the interrupt queue. Therefore, in this example, after detecting an interrupt event being triggered, first handling module 1801 handles a current interrupt event in an interrupt queue according to a current time and an arrangement sequence of the interrupt events in the interrupt queue. After the handling of the current interrupt event ends, detecting module 1802 detects a blocking time of a kernel process caused by the handling of the interrupt event.

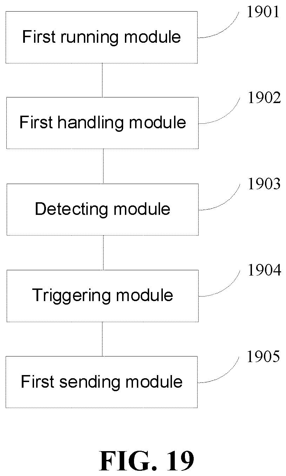

In some embodiments of the present disclosure, before the current interrupt event in the interrupt queue is handled by first handling module 1801, the apparatus further includes a part configured to acquire a run queue corresponding to the kernel process and run the run queue in units of preset running units of the virtual processor, according to an arrangement sequence of preset running units in the run queue, until a process scheduling command is received. As shown in **FIG. 19**, the process handling apparatus further includes a first running module 1901, a first handling module 1902, a detecting module 1903, a triggering module 1904, and a first sending module 1905.

First running module 1901 is configured to acquire a run queue corresponding to the kernel process, and execute the run queue in units of preset running units of the virtual processor, according to an arrangement sequence of preset running units in the run queue, until a process scheduling command is received. One or more preset running units of the virtual processor are placed in the run queue.

First handling module 1902 is configured to handle a current interrupt event in an interrupt queue in response to detecting that an interrupt event is triggered.

Detecting module 1903 is configured to detect a blocking time of a kernel process in response to an end of the handling of the current interrupt event in the interrupt queue.

Triggering module 1904 is configured to trigger a soft interrupt event of a virtual processor when the blocking time of the kernel process exceeds a preset time threshold.

First sending module 1905 is configured to send an intermediate start instruction to the virtual processor in response to that the soft interrupt event of the virtual processor is triggered, so that the virtual processor runs for a preset time period.

For integrity of the handling of virtual processor data, in this example, when first running module 1901 runs the virtual processor data, the virtual processor data are executed in units of preset running units of the virtual processor. That is, a run queue corresponding to the kernel process is acquired and determined, then the run queue is executed in units of preset running units of the virtual processor, according to an arrangement sequence of preset running units in the run queue, until a process scheduling command is received to stop the running of the virtual processor. One or more preset running units of the virtual processor are placed in the run queue. In some embodiments of the present disclosure, the preset running units of the virtual processor can be formed by encapsulating minimum loops of running of the virtual processor.

In some embodiments of the present disclosure, one or more kernel processes can be provided in the virtual machine monitor. The number of the kernel processes can be determined by the number of physical processors. For example, the number of the kernel processes to be provided is the same as the number of physical processors. Each kernel process is responsible for maintaining one run queue.

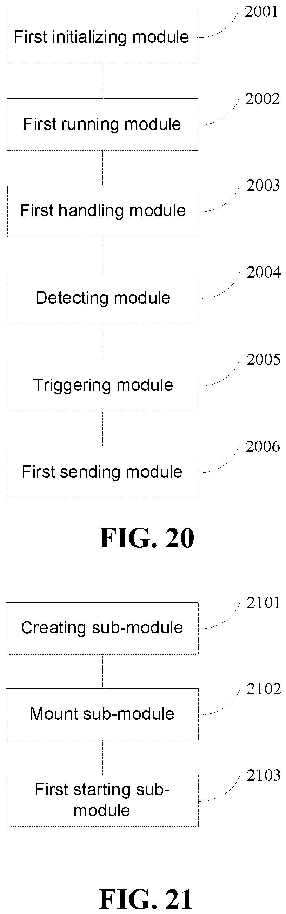

In some embodiments of the present disclosure, before a run queue corresponding to the kernel process acquired and then the run queue executed by first running module 1901, the apparatus further includes a part that configured to initialize the kernel process. As shown in **FIG. 20**, the process handling apparatus further includes a first initializing module 2001, a first running module 2002, a first handling module 2003, a detecting module 2004, a triggering module 2005, and a first sending module 2006.

First initializing module 2001 is configured to initialize the kernel process.

First running module 2002 is configured to acquire a run queue corresponding to the kernel process, and run the run queue in units of preset running units of the virtual processor, according to an arrangement sequence of preset running units in the run queue, until a process scheduling command is received. One or more preset running units of the virtual processor are placed in the run queue.

First handling module 2003 is configured to handle a current interrupt event in an interrupt queue in response to detecting an interrupt event being triggered.

Detecting module 2004 is configured to detect a blocking time of a kernel process in response to an end of the handling of the current interrupt event in the interrupt queue.

Triggering module 2005 is configured to trigger a soft interrupt event of a virtual processor when the blocking time of the kernel process exceeds a preset time threshold.

First sending module 2006 configured to send an intermediate start instruction to the virtual processor in response to that the soft interrupt event of the virtual processor is triggered, so that the virtual processor runs for a preset time period.

In order to ensure the kernel process performing well, in this example, before starting to work, the first initializing module 2001 is configured to initialize the kernel process.

In some embodiments of the present disclosure, as shown in **FIG. 21**, first initializing module 2001 further includes a creating sub-module 2101, a mount sub-module 2102, and a first starting sub-module 2103.

Creating sub-module 2101 is configured to create a kernel process.

Mount sub-module 2102 is configured to, in response to receiving a mount request sent by a virtual processor, place one or more preset running units of the virtual processor in the run queue corresponding to the kernel process, and send a mount success message to the virtual processor.

First starting sub-module 2103 is configured to start the kernel process in response to receiving a kernel process wake-up request sent by the virtual processor.

In this example, when a kernel process is initialized, creating sub-module 2101 creates one or more kernel processes. For each kernel process, after receiving a mount request sent by the virtual processor, mount sub-module 2102 places one or more preset running units of the virtual processor in a run queue corresponding to the kernel process, and sends a mount success message to the virtual processor. The mount request can include kernel process identification information and request body information, so that the virtual machine monitor places the one or more preset running units of the virtual processor in the run queue of the kernel process corresponding to the kernel process identification information according to the kernel process identification information. Of course, the mount request can also only include the request body information. In this case, the virtual machine monitor randomly selects a kernel process for placing the one or more preset running units of the virtual processor. Then, first starting sub-module 2103 starts running the kernel process after receiving a kernel process wake-up request sent by the virtual processor.

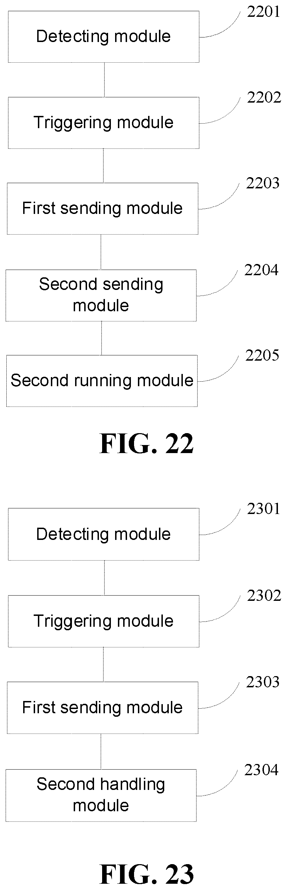

In some embodiments of the present disclosure, the apparatus further includes a part that configured to interact with a virtual processor to execute a preset running request. As shown in **FIG. 22**, the process handling apparatus includes a detecting module 2201, a triggering module 2202, a first sending module 2203, a second sending module 2204, and second running module 2205.

Detecting module 2201 is configured to detect a blocking time of a kernel process in response to an end of the handling of a current interrupt event in an interrupt queue.

Triggering module 2202 is configured to trigger a soft interrupt event of a virtual processor when the blocking time of the kernel process exceeds a preset time threshold.

First sending module 2203 is configured to send an intermediate start instruction to the virtual processor in response to that the soft interrupt event of the virtual processor is triggered, so that the virtual processor runs for a preset time period.

Second sending module 2204 is configured to, in response to receiving a preset running request, send an intermediate wake-up request to the virtual processor. The process handling apparatus (e.g., a virtual machine monitor) enters a sleep state after receiving a wake-up success message sent by the virtual processor. The intermediate wake-up request carries information about the preset running request.

Second running module 2205 is configured to enter a running state in response to receiving a preset running request handling end message sent by the virtual processor.

If the virtual machine monitor receives a running request that cannot be completed by the virtual machine monitor but can only be completed by the virtual processor, such as a user-mode-based running request, second sending module 2204 is required to be configured to send to the virtual processor an intermediate wake-up request carrying information about the preset running request. The virtual machine monitor enters the sleep state after receiving a wake-up success message sent by the virtual processor so that the preset running request is turned to be completed by the virtual processor. With the help of second running module 2205, the process handling apparatus (e.g., a virtual machine monitor) enters a running state again after receiving a preset running request handling end message sent by the virtual processor.

In some embodiments of the present disclosure, the apparatus further includes a part configured to handle a next interrupt event in the interrupt queue in response to an end of the preset time period. As shown in **FIG. 23**, the process handling apparatus includes a detecting module 2301, a triggering module 2302, a first sending module 2303, and a second handling module 2304.

Detecting module 2301 is configured to detect a blocking time of a kernel process in response to an end of the handling of a current interrupt event in an interrupt queue.

Triggering module 2302 is configured to trigger a soft interrupt event of a virtual processor when the blocking time of the kernel process exceeds a preset time threshold.

First sending module 2303 is configured to send an intermediate start instruction to the virtual processor in response to that the soft interrupt event of the virtual processor is triggered, so that the virtual processor runs for a preset time period.

Second handling module 2304 is configured to handle a next interrupt event in the interrupt queue in response to an end of the preset time period.

In this example, after the preset time period in which the virtual processor performs an intermediate start, that is, after the intermediate start ends, the virtual machine monitor continues to handle a next interrupt event in the interrupt queue, and detects the blocking time of the kernel process after the next interrupt event is handled. If there is no next interrupt event in the interrupt queue, the virtual machine monitor continues to handle other processes.

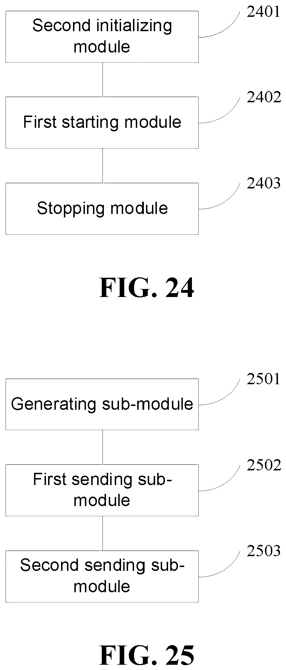

**FIG. 24** shows a structural block diagram of a process handling apparatus according to some embodiments of the present disclosure. The apparatus can be implemented as part or all of an electronic device by software, hardware, or a combination of the two. For example, the apparatus can be implemented as a virtual processor. As shown in **FIG. 24**, the process handling apparatus includes a second initializing module 2401, a first starting module 2402, and a stopping module 2403.

Second initializing module 2401 is configured to initialize a virtual processor.

First starting module 2402 is configured to start an intermediate running in response to receiving an intermediate start instruction sent by a virtual machine monitor. The length of time for the intermediate running is a preset time period.

Stopping module 2403 is configured to stop the intermediate running in response to an end of the preset time period.

As mentioned above, under a KVM architecture, a virtual processor runs as an ordinary process. Of course, there are also some systems and operation and maintenance programs on a host machine. If the systems and operation and maintenance programs are running at the same time while the virtual processor is running, there will be a contention for virtual processor resources. If the systems and operation and maintenance programs are running in a kernel mode without actively releasing resources, it will cause a single long-time jitter phenomenon of the virtual processor. To solve the problem of resource contention, kernel preemption is usually used. However, kernel preemption just provides more points of time for preemption, and cannot realize resource preemption at any moment. In addition, the implementation of kernel preemption also brings changes to the entire kernel, and introduces more challenges regarding stability and security.

Considering the above problems, a process handling apparatus is proposed according to some embodiments of the present disclosure. This apparatus is configured to determine whether an intermediate start is required for a virtual processor by detecting a blocking time of a kernel process by a virtual machine monitor when handling an interrupt event; and perform an intermediate start on the virtual processor when a preset condition is met. This technical solution can realize a compensating running for the virtual processor in the context of soft interrupts. Therefore, a phenomenon of long-time blocking and a single long-time jitter of the virtual processor are avoided under the premise of ensuring the stability and security of data and resources.

In order to avoid the phenomena of long-time blocking and single long-time jitter of the virtual processor, in this example, after the virtual processor is initialized and mounted on the virtual machine monitor by second initializing module 2401, if first starting module 2402 receives an intermediate start instruction sent by the virtual machine monitor, an intermediate running is started. The length of time for the intermediate running of the virtual processor is a preset time period. After the preset time period ends, stopping module 2403 stops the intermediate running.

The preset time period refers to a duration for performing the compensatory running on the virtual processor. The value of the preset time period can be set according to the needs of practical applications and is not specifically limited herein. For example, the preset time period can be set to 0.1ms-0.5ms, etc. For example, if the preset time period is set to 0.1ms, it means that the virtual processor runs for 0.1ms as a compensation.

In some embodiments of the present disclosure, as shown in **FIG. 25**, second initializing module 2401 further includes a generating sub-module 2501, a first sending sub-module 2502, and a second sending sub-module 2503.

Generating sub-module 2501 is configured to generate one or more preset running units.

First sending sub-module 2502 is configured to send a mount request to the virtual machine monitor to place the one or more preset running units in a run queue corresponding to a kernel process of the virtual machine monitor.

Second sending sub-module 2503 is configured to, in response to receiving a mount success message sent by the virtual machine monitor, send a kernel process wake-up request to the virtual machine monitor, so that the second sending sub-module 2503 enters a sleep state, and the virtual machine monitor starts the kernel process.

In this example, when the virtual processor is initialized, generating sub-module 2501 generates one or more preset running units by encapsulating minimum loops of running of the virtual processor. First sending sub-module 2502 sends a mount request to the virtual machine monitor to place the one or more preset running units in a run queue corresponding to a kernel process of the virtual machine monitor for the kernel process performing running operation. After a mount success message sent by the virtual machine monitor is received, second sending sub-module 2503 sends a kernel process wake-up request to the virtual machine monitor to wake up the kernel process, and the virtual processor then enters a sleep state.

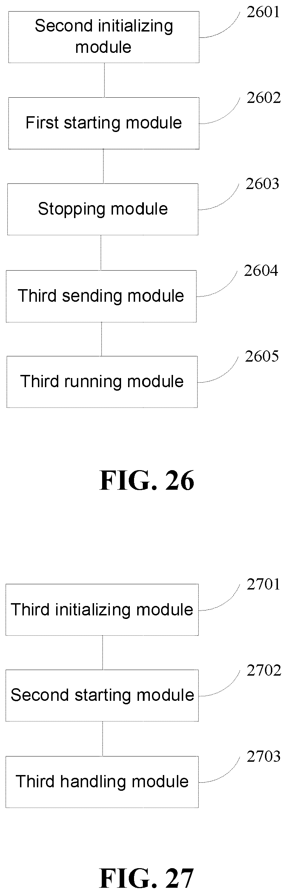

In some embodiments of the present disclosure, the apparatus further includes a part configured to interact with the virtual machine monitor to execute a preset running request. As shown in **FIG. 26**, the process handling apparatus includes a second initializing module 2601, a first starting module 2602, a stopping module 2603, a third sending module 2604, and a third running module 2605.

Second initializing module 2601 is configured to initialize a virtual processor.

First starting module 2602 is configured to start an intermediate running in response to receiving an intermediate start instruction sent by a virtual machine monitor. The length of time for the intermediate running is a preset time period.

Stopping module 2603 is configured to stop the intermediate running in response to an end of the preset time period.

Third sending module 2604 is configured to, in response to receiving an intermediate wake-up request sent by the virtual machine monitor, make the virtual processor enter an intermediate running state from a sleep state, and send a wake-up success message to the virtual machine monitor. The intermediate wake-up request carries information about a preset running request.

Third running module 2605 is configured to handle the preset running request, After the handling of the preset running request ends, third running module 2605 is further configured to send a preset running request handling end message to the virtual machine monitor to enter a sleep state.

If the virtual machine monitor receives a running request that cannot be completed by the virtual machine monitor but can only be completed by the virtual processor, such as a user-mode-based running request, third sending module 2604 is required to be configured to send an intermediate wake-up request carrying information about the preset running request to the virtual processor. In this case, after receiving the intermediate wake-up request sent by the virtual machine monitor, the virtual processor enters the intermediate running state from the sleep state, and sends a wake-up success message to the virtual machine monitor. Third running module 2605 of the virtual processor handles the preset running request. After the handling of the preset running request ends, the virtual processor sends a preset running request handling end message to the virtual machine monitor to wake-up again the virtual machine monitor. The virtual processor enters the sleep state again.

**FIG. 27** shows a structural block diagram of a process handling apparatus according to some embodiments of the present disclosure. The apparatus can be implemented as part or all of an electronic device by software, hardware, or a combination of the two. For example, the apparatus can be implemented as a process handling system. As shown in FIG. 27, the process handling apparatus includes a third initializing module 2701, a second starting module 2702, and a third handling module 2703.

Third initializing module 2701 is configured to initialize a kernel process of a virtual machine monitor and a virtual processor.

Second starting module 2702 is configured to perform an intermediate start on the virtual processor when an interrupt event of the kernel process is triggered and a preset condition is met, so that the virtual processor runs for a preset time period.

Third handling module 2703 is configured to handle a next interrupt event in an interrupt queue in response to an end of the preset time period.

As mentioned above, under a KVM architecture, a virtual processor runs as an ordinary process. Of course, there are also some systems and operation and maintenance programs on a host machine. If the systems and operation and maintenance programs are running at the same time while the virtual processor is running, there will be a contention for virtual processor resources. If the systems and operation and maintenance programs are running in a kernel mode without actively releasing resources, it will cause a single long-time jitter phenomenon of the virtual processor. To solve the problem of resource contention, kernel preemption is usually used. However, kernel preemption just provides more points of time for preemption, and cannot realize resource preemption at any moment. In addition, the implementation of kernel preemption also brings changes to the entire kernel, and introduces more challenges regarding stability and security.

Considering the above problems, a process handling apparatus is proposed in this example. The apparatus is configured to detect a blocking time of a kernel process by a virtual machine monitor when handling an interrupt event, determine whether an intermediate start is required for a virtual processor, and perform an intermediate start on the virtual processor when a preset condition is met. This technical solution can realize a compensating running for the virtual processor in the context of soft interrupts. Therefore, a phenomenon of long-time blocking and a single long-time jitter of the virtual processor are avoided under the premise of ensuring the stability and security of data and resources.

In this example, third initializing module 2701 initializes the kernel process of the virtual machine monitor and the virtual processor. When an interrupt event of the kernel process of the virtual machine monitor is triggered and a preset condition is met, it is considered that a compensating start of the virtual processor is required. However, in order not to have an adverse effect on the kernel process, the compensating start of the virtual processor only lasts for a preset time period. After the preset time period ends, third handling module 2703 of the virtual machine monitor turns to handle the next interrupt event in the interrupt queue.

In some embodiments of the present disclosure, the part of initializing the kernel process of the virtual machine monitor in third initializing module 2701 can be configured to create the kernel process; in response to receiving a mount request sent by the virtual processor, place one or more preset running units of the virtual processor in a run queue corresponding to the kernel process, and send a mount success message to the virtual processor; and start the kernel process in response to receiving a kernel process wake-up request sent by the virtual processor.

In order to ensure the kernel process performing well, in this example, before starting to work, the kernel process is required to be initialized. Specifically, one or more kernel processes are created. For each kernel process, after a mount request sent by the virtual processor is received, one or more preset running units of the virtual processor are placed in a run queue corresponding to the kernel process, and a mount success message is sent to the virtual processor. The mount request can include kernel process identification information and request body information, so that the virtual machine monitor places the one or more preset running units of the virtual processor in the run queue of the kernel process corresponding to the kernel process identification information according to the kernel process identification information. Of course, the mount request can also only include the request body information. In this case, the virtual machine monitor randomly selects a kernel process for placing the one or more preset running units of the virtual processor, and then starts running the kernel process after receiving a kernel process wake-up request sent by the virtual processor.

In some embodiments of the present disclosure, the part of initializing the virtual processor in third initializing module 2701 can be configured to generate one or more preset running units; send a mount request to a virtual machine monitor to place the one or more preset running units in a run queue corresponding to a kernel process of the virtual machine monitor; and in response to receiving a mount success message sent by the virtual machine monitor, send a kernel process wake-up request to the virtual machine monitor and entering a sleep state, so that the virtual machine monitor starts the kernel process.

In order to ensure the virtual processor performing well, in this example, before starting to work, the virtual processor is required to be initialized. Specifically, when the virtual processor is initialized, one or more preset running units are generated by encapsulating minimum loops of running of the virtual processor. A mount request is sent to the virtual machine monitor to place the one or more preset running units in a run queue corresponding to a kernel process of the virtual machine monitor, such that the kernel process performs running operation. After a mount success message sent by the virtual machine monitor is received, a kernel process wake-up request is sent to the virtual machine monitor to wake up the kernel process. The virtual processor then enters a sleep state.

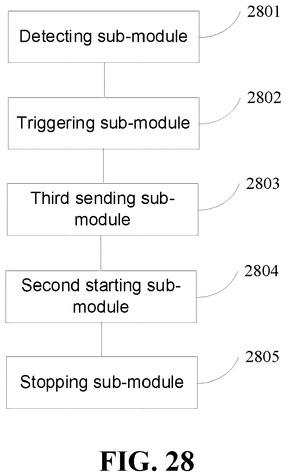

In some embodiments of the present disclosure, as shown in **FIG. 28**, second starting module 2702 includes a detecting sub-module 2801, a triggering sub-module 2802, a third sending sub-module 2803, second starting sub-module 2804, and a stopping sub-module 2805.

Detecting sub-module 2801 is configured to detect a blocking time of a kernel process in response to an end of the handling of a current interrupt event in an interrupt queue.

Triggering sub-module 2802 is configured to trigger a soft interrupt event of a virtual processor when the blocking time of the kernel process exceeds a preset time threshold.

Third sending sub-module 2803 is configured to send an intermediate start instruction to the virtual processor in response to that the soft interrupt event of the virtual processor is triggered.

Second starting sub-module 2804 is configured to start an intermediate running in response to receiving the intermediate start instruction sent by the virtual machine monitor. The length of time for the intermediate running is a preset time period.

Stopping sub-module 2805 is configured to stop the intermediate running in response to an end of the preset time period.

In order to avoid the phenomena of long-time blocking and single long-time jitter of a virtual processor, in some embodiments of the present disclosure, whenever the handling of an interrupt event in the interrupt queue ends, the blocking time of a kernel process is detected by detecting sub-module 2801 of the virtual machine monitor. If the blocking time of the kernel process exceeds a preset time threshold, it is considered that the long-time blocking phenomenon may occur in the virtual processor and compensating running of the virtual processor is required. Then, triggering sub-module 2802 triggers a soft interrupt event of the virtual processor. Third sending sub-module 2803 sends an intermediate start instruction to the virtual processor. Second starting sub-module 2804 of the virtual processor starts an intermediate running after receiving the intermediate start instruction sent by the virtual machine monitor. The length of time for the intermediate running of the virtual processor is a preset time period. After the preset time period ends, stopping sub-module 2805 of the virtual processor stops the intermediate running.

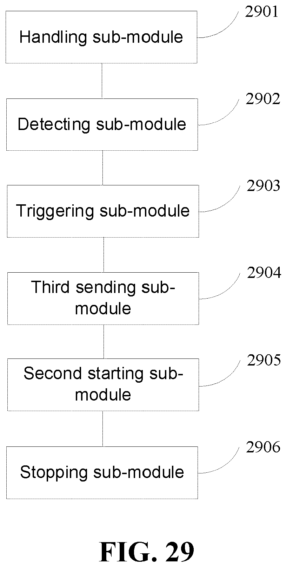

In some embodiments of the present disclosure, before the blocking time of a kernel process detected by detecting sub-module 2801, the apparatus further includes a part configured to handle the current interrupt event in the interrupt queue by the virtual machine monitor in response to detecting the interrupt event being triggered. As shown in **FIG. 29**, the second starting module 2702 further includes a handling sub-module 2901, a detecting sub-module 2902, a triggering sub-module 2903, a third sending sub-module 2904, a second starting sub-module 2905, and a stopping sub-module 2906.

Handling sub-module 2901 is configured to handle a current interrupt event in an interrupt queue in response to detecting that an interrupt event is triggered.

Detecting sub-module 2902 is configured to detect a blocking time of a kernel process in response to an end of the handling of the current interrupt event in the interrupt queue.

Triggering sub-module 2903 is configured to trigger a soft interrupt event of a virtual processor when the blocking time of the kernel process exceeds a preset time threshold.

Third sending sub-module 2904 is configured to send an intermediate start instruction to the virtual processor in response to that the soft interrupt event of the virtual processor is triggered.

Second starting sub-module 2905 is configured to start an intermediate running in response to receiving an intermediate start instruction sent by the virtual machine monitor. The length of time for the intermediate running is a preset time period.

Stopping sub-module 2906 is configured to stop the intermediate running in response to an end of the preset time period.

As mentioned above, there may be one or more interrupt events in the interrupt queue. Therefore, in this example, after an interrupt event being triggered is detected, a current interrupt event in an interrupt queue is handled by handling sub-module 2901 of the virtual machine monitor, according to a current time and an arrangement sequence of the interrupt events in the interrupt queue. After the handling of the current interrupt event ends, the blocking time of the kernel process caused by the handling of the interrupt event is detected by detecting sub-module 2902.

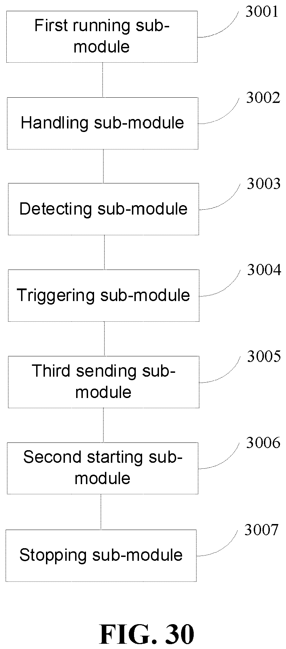

In some embodiments of the present disclosure, before the current interrupt event handled by the handling sub-module 2901, the apparatus further includes a part configured to acquire a run queue corresponding to a kernel process by the virtual machine monitor and execute the run queue in units of preset running units of the virtual processor, according to an arrangement sequence of preset running units in the run queue, until a process scheduling command is received. As shown in **FIG. 30**, second starting module 2702 further includes a first running sub-module 3001, a handling sub-module 3002, a detecting sub-module 3003, a triggering sub-module 3004, a third sending sub-module 3005, a second starting sub-module 3006, and a stopping sub-module 3007.

First running sub-module 3001 is configured to acquire a run queue corresponding to the kernel process, and execute the run queue in units of preset running units of the virtual processor, according to an arrangement sequence of preset running units in the run queue, until a process scheduling command is received. One or more preset running units of the virtual processor are placed in the run queue.

Handling sub-module 3002 is configured to handle a current interrupt event in an interrupt queue in response to detecting an interrupt event being triggered.

Detecting sub-module 3003 is configured to detect a blocking time of a kernel process in response to an end of the handling of the current interrupt event in the interrupt queue.

Triggering sub-module 3004 is configured to trigger a soft interrupt event of a virtual processor when the blocking time of the kernel process exceeds a preset time threshold.

Third sending sub-module 3005 is configured to send an intermediate start instruction to the virtual processor in response to that the soft interrupt event of the virtual processor is triggered.

Second starting sub-module 3006 is configured to start an intermediate running in response to receiving an intermediate start instruction sent by the virtual machine monitor. The length of time for the intermediate running is a preset time period.

Stopping sub-module 3007 is configured to stop the intermediate running in response to an end of the preset time period.

For integrity of the handling of virtual processor data, in this example, when the virtual processor data is run by the virtual machine monitor, the virtual processor data is run by first running sub-module 3001 of the virtual machine monitor in units of preset running units of the virtual processor. That is, a run queue corresponding to the kernel process is first acquired and determined by first running sub-module 3001 of the virtual machine monitor, and executed in units of preset running units of the virtual processor, according to the arrangement sequence of the preset running units in the run queue, until a process scheduling command is received to stop the running of the virtual processor. One or more preset running units of the virtual processor are placed in the run queue. In some embodiments of the present disclosure, the preset running units of the virtual processor can be formed by encapsulating minimum loops of running of the virtual processor.

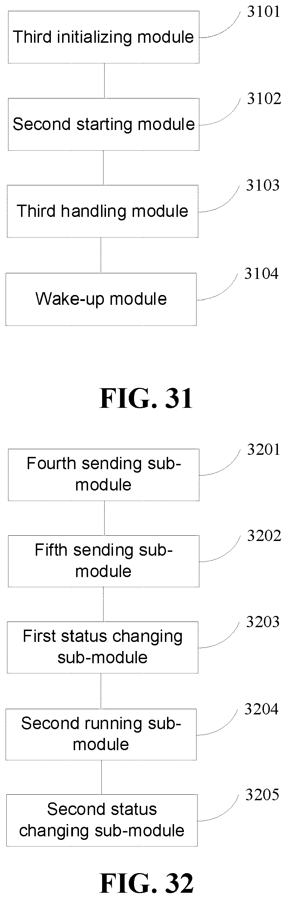

In some embodiments of the present disclosure, the apparatus further includes a part configured to perform, by the virtual machine monitor, an intermediate wake-up for the virtual processor in response to receiving a preset running request. As shown in **FIG. 31**, the process handling apparatus includes a third initializing module 3101, a second starting module 3102, a third handling module 3103, and a wake-up module 3104.

Third initializing module 3101 is configured to initialize a kernel process of a virtual machine monitor and a virtual processor.

Second starting module 3102 is configured to perform an intermediate start on the virtual processor when an interrupt event of the kernel process is triggered and a preset condition is met, so that the virtual processor runs for a preset time period.

Third handling module 3103 is configured to handle a next interrupt event in the interrupt queue in response to an end of the preset time period.

Wake-up module 3104 is configured to perform an intermediate wake-up for the virtual processor in response to receiving a preset running request.

In this example, if the virtual machine monitor receives a running request that cannot be completed by the virtual machine monitor but can only be completed by the virtual processor, such as a user-mode-based running request, wake-up module 3104 needs to be configured to wake up the virtual processor to enter a running state, so as to handle a preset running request.

In some embodiments of the present disclosure, as shown in **FIG. 32**, the wake-up module 3104 further includes a fourth sending sub-module 3201, a fifth sending sub-module 3202, a first status changing sub-module 3203, a second running sub-module 3204, and a second status changing sub-module 3205.

Fourth sending sub-module 3201 is configured to send an intermediate wake-up request to the virtual processor in response to receiving a preset running request. The intermediate wake-up request carries information about the preset running request.

Fifth sending sub-module 3202 is configured to, in response to receiving an intermediate wake-up request sent by the virtual machine monitor, enter an intermediate running state from the sleep state, and send a wake-up success message to the virtual machine monitor.

First status changing sub-module 3203 is configured to make the virtual machine monitor enter a sleep state after receiving the wake-up success message sent by the virtual processor.

Second running sub-module 3204 is configured to handle the preset running request, and after the handling of the preset running request ends, send a preset running request handling end message to the virtual machine monitor, and enter a sleep state.

Second status changing sub-module 3205 is configured to make the virtual machine monitor enter a running state in response to receiving a preset running request handling end message sent by the virtual processor.

When the virtual machine monitor receives a running request that cannot be completed by the virtual machine monitor but can only be completed by the virtual processor, fourth sending sub-module 3201 needs to send to the virtual processor an intermediate wake-up request carrying information about the preset running request. After receiving the intermediate wake-up request sent by the virtual machine monitor, fifth sending sub-module 3202 of the virtual processor enters an intermediate running state from the sleep state, and sends a wake-up success message to the virtual machine monitor. First status changing sub-module 3203 of the virtual machine monitor makes the virtual machine monitor enter a sleep state after receiving the wake-up success message sent by the virtual processor, so that the preset running request is completed by second running sub-module 3204 of the virtual processor. Second running sub-module 3204 of the virtual processor handles the preset running request, sends a preset running request handling end message to the virtual machine monitor after the handling of the preset running request ends, and makes the virtual processor enter the sleep mode. Second status changing sub-module 3205 of the virtual machine monitor resumes the virtual machine monitor to a running state after receiving the preset running request handling end message sent by the virtual processor.

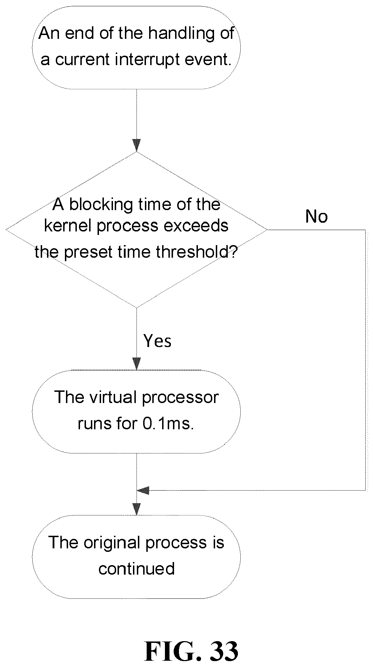

A scenario is taken as an example to further illustrate the technical solution of the present disclosure. As shown in **FIG. 33**, in this scenario, if an end of the handling of a current interrupt event in the interrupt queue is determined, whether a blocking time of a kernel process exceeds a preset time threshold is detected. If a blocking time of the kernel process exceeds the preset time threshold, a soft interrupt event of a virtual processor is triggered to make the virtual processor run for 0.1ms, and then the original process is continued. If the blocking time of the kernel process does not exceed the preset time threshold, the soft interrupt event of the virtual processor is not triggered and the original process is continued.

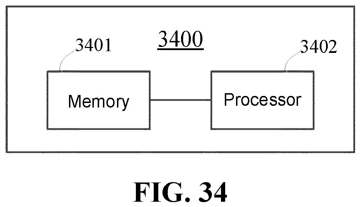

The embodiments of the present disclosure also disclose an electronic device. **FIG. 34** shows a structural block diagram of an electronic device according to some embodiments of the present disclosure. As shown in **FIG. 34**, the electronic device 3400 includes a memory 3401 and a processor 3402.

Memory 3401 is configured to store one or more computer instructions. The one or more computer instructions are executed by processor 3402 to implement any of the above method steps.

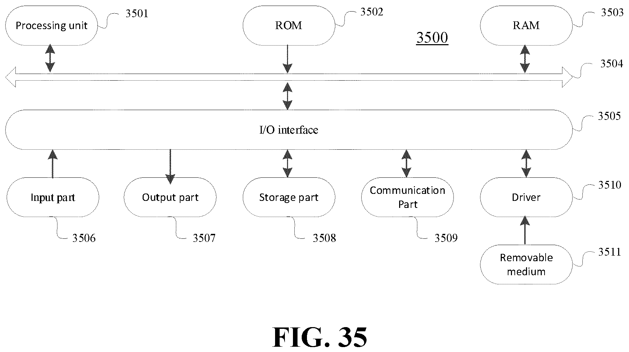

**FIG. 35** is a schematic structural diagram of a computer system suitable for implementing a process handling method according to some embodiments of the present disclosure.

As shown in **FIG. 35**, a computer system 3500 includes a processing unit 3501, which can perform various handlings in the above-mentioned embodiments according to programs stored in a Read-Only Memory (ROM) 3502 or programs loaded from a storage part 3508 into a Random-Access Memory (RAM) 3503. In RAM 3503, various programs and data required for the operation of system 3500 are also stored. Processing unit 3501, ROM 3502, and RAM 3503 are connected to each other through a bus 3504. An input/output (I/O) interface 3505 is also connected to bus 3504.

The following components are connected to I/O interface 3505: an input part 3506 including a keyboard, a mouse, etc.; an output part 3507 including a Cathode Ray Tube (CRT), a Liquid Crystal Display (LCD), and a speaker, etc.; a storage part 3508 including a hard disk, etc.; and a communication part 3509 including a network interface card such as a LAN card and a modem. Communication part 3509 performs communication processing via a network such as Internet. A driver 3510 is also connected to I/O interface 3505 as needed. A removable medium 3511, such as a magnetic disk, an optical disk, a magneto-optical disk, a semiconductor memory, etc., is installed on driver 3510 as needed, so that the computer program read therefrom is installed into storage part 3508 as needed. Processing unit 3501 may be implemented as a CPU (Central Processing Unit), a GPU (General Processing Unit), an FPGA (Field Programmable Gate Array), an NPU (Natural Processing Unit), and an AI (Artificial Intelligence) chip.

In particular, according to some embodiments of the present disclosure, the method described above can be implemented as a computer software program. For example, the implementation of the present disclosure includes a computer program product, which includes a computer program tangibly included on a readable medium thereof, and the computer program includes program code for performing the process handling method. In such implementations, the computer program can be downloaded and installed from the network through communication part 3509, and/or installed from removable medium 3511.

The flow charts and block diagrams in the accompanying drawings illustrate architectures, functions, and operations of the possible implementations of the systems, methods, and computer program products according to various implementations of the present disclosure. In this regard, each block in the route diagram or block diagram may represent a module, program segment, or part of code, which includes one or more executable instructions for implementing the specified logic functions. It should also be noted that, in some alternative implementations, the functions marked in the blocks may also occur in a different order from that marked in the drawings. For example, two blocks shown in succession may actually be executed substantially in parallel, and they may sometimes also be executed in the reverse order, depending on the functions involved. It should also be noted that each block in the block diagrams and/or flow charts, and the combination of the blocks in the block diagrams and/or flow charts, may be implemented by a dedicated hardware-based system that performs specified functions or operations, or by a combination of dedicated hardware and computer instructions.

The units or modules described in the embodiments of the present disclosure may be implemented by software or hardware. The described units or modules may also be provided in the processor, and the names of these units or modules do not in any way constitute a limitation on the units or modules themselves.

As another aspect, the embodiments of the present disclosure also provide a computer-readable storage medium. The computer-readable storage medium may be a computer-readable storage medium included in the apparatus described in the above implementations; or may exist alone without being assembled in the device. The computer-readable storage medium stores one or more programs, and the programs are used by one or more processors to perform the methods described in the embodiments of the present disclosure.

The above description is only a preferred embodiment of the present disclosure and an explanation of the applied technical principles. Those skilled in the art should understand that the scope of the disclosure involved in the embodiments of the present disclosure is not limited to the technical solutions formed by specific combinations of the above technical features, but should also cover other technical solutions formed by any combination of the above technical features or equivalent features thereof without departing from the inventive concept. For example, the above features and the technical features disclosed in (but not limited to) the embodiments of the present disclosure having similar functions are replaced with each other to form a technical solution.

In some embodiments, a non-transitory computer-readable storage medium including instructions is also provided, and the instructions may be executed by a device (such as the disclosed encoder and decoder), for performing the above-described methods. Common forms of non-transitory media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM or any other flash memory, NVRAM, a cache, a register, any other memory chip or cartridge, and networked versions of the same. The device may include one or more processors (CPUs), an input/output interface, a network interface, and/or a memory.

It should be noted that, the relational terms herein such as "first" and "second" are used only to differentiate an entity or operation from another entity or operation, and do not require or imply any actual relationship or sequence between these entities or operations. Moreover, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items.

As used herein, unless specifically stated otherwise, the term "or" encompasses all possible combinations, except where infeasible. For example, if it is stated that a database may include A or B, then, unless specifically stated otherwise or infeasible, the database may include A, or B, or A and B. As a second example, if it is stated that a database may include A, B, or C, then, unless specifically stated otherwise or infeasible, the database may include A, or B, or C, or A and B, or A and C, or B and C, or A and B and C.

It is appreciated that the above described embodiments can be implemented by hardware, or software (program codes), or a combination of hardware and software. If implemented by software, it may be stored in the above-described computer-readable media. The software, when executed by the processor can perform the disclosed methods. The computing units and other functional units described in this disclosure can be implemented by hardware, or software, or a combination of hardware and software. One of ordinary skill in the art will also understand that multiple ones of the above described modules/units may be combined as one module/unit, and each of the above described modules/units may be further divided into a plurality of sub-modules/sub-units.

In the foregoing specification, embodiments have been described with reference to numerous specific details that can vary from implementation to implementation. Certain adaptations and modifications of the described embodiments can be made. Other embodiments can be apparent to those skilled in the art from consideration of the specification and practice of the disclosure disclosed herein. It is intended that the specification and examples be considered as exemplary only, with a true scope and spirit of the disclosure being indicated by the following claims. It is also intended that the sequence of steps shown in figures are only for illustrative purposes and are not intended to be limited to any particular sequence of steps. As such, those skilled in the art can appreciate that these steps can be performed in a different order while implementing the same method.

In the drawings and specification, there have been disclosed exemplary embodiments. However, many variations and modifications can be made to these embodiments. Accordingly, although specific terms are employed, they are used in a generic and descriptive sense only and not for purposes of limitation.

## Claims

1. A method for process handling, comprising:
detecting a blocking time of a kernel process in response to an ending of handling a current interrupt event in an interrupt queue;
triggering a soft interrupt event of a virtual processor when the blocking time of the kernel process exceeds a preset time threshold; and
sending an intermediate start instruction to the virtual processor in response to the soft interrupt event of the virtual processor being triggered, to make the virtual processor run for a preset time period.

2. The process handling method according to claim 1, wherein before detecting the blocking time of the kernel process in response to the end of handling of the soft interrupt event, the method further comprises:
handling a current interrupt event in an interrupt queue in response to detecting the interrupt event being triggered.

3. The process handling method according to claim 2, wherein before handling the current interrupt event in the interrupt queue in response to detecting the interrupt event being triggered, the method further comprises:
acquiring a run queue corresponding to the kernel process, and
executing the run queue in units of preset running units of the virtual processor, according to an arrangement sequence of the preset running units in the run queue, until a process scheduling command is received, wherein one or more preset running units of the virtual processor are placed in the run queue.

4. The process handling method according to claim 3, wherein before acquiring the run queue corresponding to the kernel process, and executing the run queue in units of preset running units of the virtual processor, according to an arrangement sequence of the preset running, units in the run queue until a process scheduling command is received, the method further comprises:
initializing the kernel process.

5. The process handling method according to claim 4, wherein initializing the kernel process comprises:
creating the kernel process;
in response to receiving a mount request sent by the virtual processor, placing one or more preset running units of the virtual processor in the run queue corresponding to the kernel process, and sending a mount success message to the virtual processor; and
starting the kernel process in response to receiving a kernel process wake-up request sent by the virtual processor.

6. The process handling method according to any one of claims 1-5, further comprising:
in response to receiving a preset running request, sending an intermediate wake-up request to the virtual processor, and entering a sleep state after receiving a wake-up success message sent by the virtual processor, wherein the intermediate wake-up request carries information about the preset running request; and
entering a running state in response to receiving a preset running request handling end message sent by the virtual processor.

7. The process handling method according to any one of claims 1-5, further comprising:
handling a next interrupt event in the interrupt queue in response to an end of the preset time period.

8. A method for process handling, comprising:
initializing a virtual processor;
starting an intermediate running in response to receiving an intermediate start instruction sent by a virtual machine monitor, wherein a length of time for the intermediate running is a preset time period; and
stopping the intermediate running in response to an ending of the preset time period.

9. The process handling method according to claim 8, wherein initializing a virtual processor comprises:
generating one or more preset running units;
sending a mount request to the virtual machine monitor to place the one or more preset running units in a run queue corresponding to a kernel process of the virtual machine monitor; and
in response to receiving a mount success message sent by the virtual machine monitor, sending a kernel process wake-up request to the virtual machine monitor and entering a sleep state, so that the virtual machine monitor starts the kernel process.

10. The process handling method according to claim 8 or 9, further comprising:
in response to receiving an intermediate wake-up request sent by the virtual machine monitor, entering an intermediate running state from the sleep state, and sending a wake-up success message to the virtual machine monitor, wherein the intermediate wake-up request carries information about a preset running request; and
executing the preset running request, and after an end of handling the preset running request, sending a preset running request handling end message to the virtual machine monitor to enter the sleep state.

11. A method for process handling, comprising:
initializing a kernel process of a virtual machine monitor and a virtual processor;
performing an intermediate start on the virtual processor when an interrupt event of the kernel process is triggered and a preset condition is met, so that the virtual processor runs for a preset time period; and
handling, by the virtual machine monitor, a next interrupt event in an interrupt queue in response to an ending of the preset time period.

12. The process handling method according to claim 11, wherein initializing the kernel process of the virtual machine monitor further comprises:
creating the kernel process;
in response to receiving a mount request sent by the virtual processor, placing one or more preset running units of the virtual processor in a run queue corresponding to the kernel process, and sending a mount success message to the virtual processor; and
starting the kernel process in response to receiving a kernel process wake-up request sent by the virtual processor.

13. The process handling method according to claim 11 or 12, wherein initializing a virtual processor further comprises:
generating one or more preset running units;
sending a mount request to the virtual machine monitor to place the one or more preset running units in a run queue corresponding to the kernel process of the virtual machine monitor; and
in response to receiving a mount success message sent by the virtual machine monitor, sending a kernel process wake-up request to the virtual machine monitor and entering a sleep state, so that the virtual machine monitor starts the kernel process.

14. The process handling method according to claim 11 or 12, wherein performing the intermediate start on the virtual processor when the interrupt event of the kernel process is triggered and a preset condition is met comprises:
detecting, by the virtual machine monitor, the blocking time of the kernel process in response to an end of the handling of a current interrupt event in the interrupt queue;
triggering, by the virtual machine monitor, a soft interrupt event of the virtual processor when the blocking time of the kernel process exceeds a preset time threshold;
sending, by the virtual machine monitor, an intermediate start instruction to the virtual processor in response to that the soft interrupt event of the virtual processor is triggered;
starting, by the virtual processor, an intermediate running in response to receiving the intermediate start instruction sent by the virtual machine monitor, wherein the length of time for the intermediate running is a preset time period; and
stopping, by the virtual processor, the intermediate running in response to an ending of the preset time period.

15. The process handling method according to claim 14, wherein before detecting, by the virtual machine monitor, the blocking time of the kernel process in response to an end of the handling of the current interrupt event in the interrupt queue, the method further comprises:
handling, by the virtual machine monitor, the current interrupt event in the interrupt queue in response to detecting the interrupt event being triggered.

16. The process handling method according to claim 15, wherein before handling, by the virtual machine monitor, the current interrupt event in the interrupt queue in response to detecting the interrupt event being triggered, the method further comprises:
acquiring, by the virtual machine monitor, a run queue corresponding to the kernel process, and executing the run queue in units of preset running units of the virtual processor, according to an arrangement sequence of preset running units in the run queue, until a process scheduling command is received, wherein one or more preset running units of the virtual processor are placed in the run queue.

17. The process handling method according to claim 11 or 12, further comprising:
performing, by the virtual machine monitor, an intermediate wake-up for the virtual processor in response to receiving a preset running request.

18. The process handling method according to claim 17, wherein performing, by the virtual machine monitor, the intermediate wake-up for the virtual processor in response to receiving the preset running request comprises:
sending, by the virtual machine monitor, an intermediate wake-up request to the virtual processor in response to receiving the preset running request, wherein the intermediate wake-up request carries information about the preset running request;
in response to receiving the intermediate wake-up request sent by the virtual machine monitor, the virtual processor entering an intermediate running state from a sleep state, and sending a wake-up success message to the virtual machine monitor;
the virtual machine monitor entering the sleep state after receiving the wake-up success message sent by the virtual processor;
the virtual processor executing the preset running request, and after the handling of the preset running request ends, sending a preset running request handling end message to the virtual machine monitor to enter the sleep state; and
the virtual machine monitor entering a running state in response to receiving the preset running request handling end message sent by the virtual processor.

19. An apparatus for process handling, comprising:
a detecting module configured to detect the blocking time of a kernel process in response to an end of the handling of a current interrupt event in an interrupt queue;
a triggering module configured to trigger a soft interrupt event of a virtual processor when the blocking time of the kernel process exceeds a preset time threshold; and
a first sending module configured to send an intermediate start instruction to the virtual processor in response to that the soft interrupt event of the virtual processor is triggered, so that the virtual processor runs for a preset time period.

20. The process handling apparatus according to claim 19, wherein before the detecting module, the apparatus further comprises:
a first handling module configured to handle the current interrupt event in the interrupt queue in response to detecting an interrupt event being triggered.

21. The process handling apparatus according to claim 20, wherein before the first handling module, the apparatus further comprises:
a first running module configured to acquire a run queue corresponding to the kernel process, and execute the run queue in units of preset running units of the virtual processor, according to an arrangement sequence of preset running units in the run queue, until a process scheduling command is received, wherein one or more preset running units of the virtual processor are placed in the run queue.

22. The process handling apparatus according to claim 21, wherein before the first running module, the apparatus further comprises:
a first initializing module configured to initialize the kernel process.

23. The process handling apparatus according to claim 22, wherein the first initializing module further comprises:
a creating sub-module configured to create the kernel process;
a mount sub-module configured to, in response to receiving a mount request sent by the virtual processor, place one or more preset running units of the virtual processor in the run queue corresponding to the kernel process, and send a mount success message to the virtual processor; and
a first starting sub-module configured to start the kernel process in response to receiving a kernel process wake-up request sent by the virtual processor.

24. The process handling apparatus according to any one of claims 19 to 23, further comprising:
a second sending module configured to, in response to receiving a preset running request, send an intermediate wake-up request to the virtual processor, and enter a sleep state after receiving a wake-up success message sent by the virtual processor, wherein the intermediate wake-up request carries information about the preset running request; and
a second running module configured to enter a running state in response to receiving a preset running request handling end message sent by the virtual processor.

25. The process handling apparatus according to any one of claims 19 to 23, further comprising:
a second handling module configured to handle a next interrupt event in the interrupt queue in response to an end of the preset time period.

26. An apparatus for process handling, comprising:
a second initializing module configured to initialize a virtual processor;
a first starting module configured to start an intermediate running in response to receiving an intermediate start instruction sent by a virtual machine monitor, wherein the length of time for the intermediate running is a preset time period; and
a stopping module configured to stop the intermediate running in response to an end of the preset time period.

27. The process handling apparatus according to claim 26, wherein the second initializing module further comprises:
a generating sub-module configured to generate one or more preset running units;
a first sending sub-module configured to send a mount request to the virtual machine monitor to place the one or more preset running units in a run queue corresponding to a kernel process of the virtual machine monitor; and
a second sending sub-module configured to, in response to receiving a mount success message sent by the virtual machine monitor, send a kernel process wake-up request to the virtual machine monitor and enter a sleep state, so that the virtual machine monitor starts the kernel process.

28. The process handling apparatus according to claim 26 or 27, further comprising:
a third sending module configured to, in response to receiving an intermediate wake-up request sent by the virtual machine monitor, enter an intermediate running state from the sleep state, and send a wake-up success message to the virtual machine monitor, wherein the intermediate wake-up request carries information about a preset running request; and
a third running module configured to run the preset running request, and after the handling of the preset running request ends, send a preset running request handling end message to the virtual machine monitor, and enter the sleep state.

29. A process handling apparatus, comprising:
a third initializing module configured to initialize a kernel process of a virtual machine monitor and a virtual processor;
a second starting module configured to perform an intermediate start on the virtual processor when an interrupt event of the kernel process is triggered and a preset condition is met, so that the virtual processor runs for a preset time period; and
a third handling module configured to handle a next interrupt event in an interrupt queue in response to an end of the preset time period.

30. The process handling apparatus according to claim 29, wherein a part of initializing the kernel process of the virtual machine monitor in the third initializing module is configured to:
create the kernel process;
in response to receiving a mount request sent by the virtual processor, place one or more preset running units of the virtual processor in a run queue corresponding to the kernel process, and send a mount success message to the virtual processor; and
start the kernel process in response to receiving a kernel process wake-up request sent by the virtual processor.

31. The process handling apparatus according to claim 29 or 30, wherein a part of initializing the virtual processor in the third initializing module is configured to:
generate one or more preset running units;
send a mount request to the virtual machine monitor to place the one or more preset running units in a run queue corresponding to the kernel process of the virtual machine monitor; and
in response to receiving a mount success message sent by the virtual machine monitor, send a kernel process wake-up request to the virtual machine monitor and enter a sleep state, so that the virtual machine monitor starts the kernel process.

32. The process handling apparatus according to claim 29 or 30, wherein the second starting module further comprises:
a detecting sub-module configured to detect the blocking time of the kernel process in response to an end of the handling of a current interrupt event in the interrupt queue;
a triggering sub-module configured to trigger a soft interrupt event of the virtual processor when the blocking time of the kernel process exceeds a preset time threshold;
a third sending sub-module configured to send an intermediate start instruction to the virtual processor in response to that the soft interrupt event of the virtual processor is triggered;
a second starting sub-module configured to start an intermediate running in response to receiving an intermediate start instruction sent by the virtual machine monitor, wherein the length of time for the intermediate running is a preset time period; and
a stopping sub-module configured to stop the intermediate running in response to an end of the preset time period.

33. The process handling apparatus according to claim 32, before the detecting sub-module, the apparatus further comprises:
a handling sub-module configured to handle the current interrupt event in the interrupt queue in response to detecting that an interrupt event is triggered.

34. The process handling apparatus according to claim 33, before the handling sub-module, the apparatus further comprises:
a first running sub-module configured to acquire a run queue corresponding to the kernel process, and execute the run queue in units of preset running units of the virtual processor, according to an arrangement sequence of preset running units in the run queue, until a process scheduling command is received, wherein one or more preset running units of the virtual processor are placed in the run queue.

35. The process handling apparatus according to claim 29 or 30, further comprising:
a wake-up module configured to perform an intermediate wake-up for the virtual processor in response to receiving a preset running request.

36. The process handling apparatus according to claim 35, wherein the wake-up module further comprises:
a fourth sending sub-module configured to send an intermediate wake-up request to the virtual processor in response to receiving the preset running request, wherein the intermediate wake-up request carries information about the preset running request;
a fifth sending sub-module configured to, in response to receiving the intermediate wake-up request sent by the virtual machine monitor, enter an intermediate running state from a sleep state, and send a wake-up success message to the virtual machine monitor;
a first status changing sub-module configured to enter the sleep state after receiving the wake-up success message sent by the virtual processor;
a second running sub-module configured to run the preset running request, and after the handling of the preset running request ends, send a preset running request handling end message to the virtual machine monitor, and enter the sleep state; and
a second status changing sub-module configured to enter a running state in response to receiving the preset running request handling end message sent by the virtual processor.

37. An electronic device, comprising a memory and a processor, wherein
the memory is configured to store one or more computer instructions, and the one or more computer instructions are executed by the processor to implement steps of the method according to any one of claims 1 to 18.

38. A computer-readable storage medium storing computer instructions thereon, wherein the computer instructions, when executed by one or more processors, implement steps of the method according to any one of claims 1 to 18.
